# EUROPEAN PATENT SPECIFICATION

(11) **EP 2 993 920 B1**
(45) Date of publication and mention of the grant of the patent: **01.05.2019**
(21) Application number: 13885296.7
(22) Date of filing: 23.05.2013
(51) Int. Cl.: H04W 76/12, H04W 56/00, H04W 74/00, H04W 68/00

(54) **DEVICES FOR DATA TRANSMISSION**
VORRICHTUNGEN ZUR DATENÜBERTRAGUNG
DISPOSITIFS DE TRANSMISSION DE DONNÉES

(43) Date of publication of application: 09.03.2016
(60) Divisional application: 19162576.3
(73) Proprietor: Huawei Technologies Co., Ltd., Longgang District Shenzhen, Guangdong 518129 (CN)
(72) Inventor: PANG, Lingli, Shenzhen Guangdong 518129 (CN); ZHENG, Xiaoxiao, Shenzhen Guangdong 518129 (CN)
(74) Representative: Epping - Hermann - Fischer
(86) International application number: PCT/CN2013/076150
(87) International publication number: WO 2014/186964

(56) References cited:
- EP-A1- 1 781 057
- WO-A1-2009/047025
- WO-A1-2010/048563
- WO-A2-2009/046061
- CN-A- 101 426 253
- CN-A- 102 111 803
- CN-A- 102 123 135
- CN-A- 102 340 754
- QUALCOMM EUROPE: "L1/2 aspects for enhanced UL for CELL_FACH", 3GPP DRAFT; R1-074126, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Shanghai, China; 20071002, 2 October 2007 (2007-10-02), XP050107658, [retrieved on 2007-10-02]

## Description

### TECHNICAL FIELD

The present invention relates to communications technologies, and in particular, to a data transmission method, apparatus, and system.

### BACKGROUND

With wide application of an intelligent terminal (for example, a smart phone) and a machine type communications (Machine Type Communications, MTC for short) device, increasing small data packets are transmitted. For example, for services supported by the smart phone, such as email pushing (Email push), instant messaging software MSN and QQ, and a virtual private network (Virtual Private Network, VPN for short), in a period in which no service data is generated, to maintain a connection with a server, the smart phone needs to exchange a keep alive (keep alive) message with the server, where the message is a small data packet. For another example, for services such as smart metering, intelligent transportation, and intelligent medicine in machine to machine (Machine to Machine, M2M for short) services supported by the MTC device, data transmitted in the services is also a small data packet. In a Universal Mobile Telecommunications System (Universal Mobile Telecommunication System, UMTS for short), user equipment (User Equipment, UE for short) that performs this type of services is generally set in an idle state, and a radio network controller (Radio Network Controller, RNC for short) establishes a radio resource control (Radio Resource Control, RRC for short) connection to transmit data when the UE needs to send a small data packet.

However, an existing data packet transmission procedure is excessively long and causes a delay in data transmission and relatively low transmission efficiency.

EP 1781057 A1 discloses methods for establishing a radio bearer between a network element terminating radio resource control protocol and a mobile terminal. The document provides RNC for establishing a radio bearer between the RNC and a mobile terminal, especially adapted mobile terminals and a system comprising the network element and at least one mobile terminal. In order to reduce the delays implied by the signaling in the procedure the document proposes two mechanisms. The first mechanism aims at reducing the delay implied by setting up the radio link for the radio bearer by preconfiguring a pool of resources comprising a set of at least radio bearer configuration and making the available radio bearer configurations known to the mobile terminals. The second mechanism aims at avoiding the delay implied by the explicit assignment of a radio network temporary identifier by signaling a set of available identifiers from which the mobile terminal may choose an identifier.

WO 2009046061 A2 discloses techniques for supporting operation with enhanced uplink in inactive state. A user equipment (UE) may send an access preamble for random access while in an inactive state and may receive a message containing resources allocated to the UE. The allocated resources may be selected by a Node B from a pool of resources pre-allocated to the Node B for the enhanced uplink. The UE may send information (e.g., scheduling information and/or its UE identity) to the Node B using the allocated resources. The UE may receive an acknowledgement addressed to the UE based on the UE identity. The UE may remain in the inactive state and continue to use the allocated resources until they are de-allocated. Alternatively, the UE may transition to an active state and either continue to use the allocated resources or receive an allocation of new resources for the active state.

Document WO 2010/048563 A1 represents an example of the prior art.

### SUMMARY

Embodiments of the present invention provide a base station as defined in the claim 1 and a radio network controller, RNC as defined in the claim 2 so as to simplify a transmission procedure of a small data packet and improve data transmission efficiency.

According to a first aspect, an example useful for understanding the present invention provides a data transmission method, including: receiving, by a base station, a data packet sent from user equipment (UE); and sending, by the base station, the data packet to a radio network controller (RNC), where the data packet includes a second fast transmission indication, and the second fast transmission indication is used to indicate that a fast transmission procedure is used to perform data transmission of the data packet.

In a first possible implementation manner of the first aspect, before the receiving, by a base station, a data packet sent from UE, the method further includes: receiving, by the base station, access information sent from the UE, where the access information includes a first fast transmission indication, and the first fast transmission indication is used to indicate that the UE performs data transmission by using the fast transmission procedure.

According to the first possible implementation manner of the first aspect, in a second possibleimplementation manner, the first fast transmission indication includes at least one of an access signature, physical random access channel (PRACH) channelization code, and an access timeslot.

In a third possible implementation manner of the first aspect, the receiving, by a base station, a data packet sent from UE includes: receiving, by the base station, a data packet that is sent from the UE and that includes a first fast transmission indication, where the first fast transmission indication is used to indicate that the UE performs data transmission by using the fast transmission procedure.

According to the third possible implementation manner of the first aspect, in a fourth possible implementation manner, the first fast transmission indication is spare bits spare bits in a Media Access Control message header (MAC-i header) 0 in the data packet or is an enhanced data channel radio network temporary identifier (E-RNTI) in a MAC-i header 0 in the data packet. According to the first aspect and any one of the first to the fourth possible implementation manners of the first aspect, in a fifth possible implementation manner, the sending, by the base station, the data packet to an RNC, where the data packet includes a second fast transmission indication includes: sending, by the base station, a random access channel (RACH) data frame to the RNC, where the second fast transmission indication is a transmission manner identifier included in the RACH DATA FRAME; or sending, by the base station, an enhanced data channel (E-DCH) DATA FRAME to the RNC, where the second fast transmission indication is a resource identifier and/or a transmission manner identifier that are/is included in the E-DCH DATA FRAME, or an E-DCH radio network temporary identifier (E-RNTI) in the E-DCH DATA FRAME, or an E-RNTI and a data packet type flag that are in the E-DCH DATA FRAME. According to the first aspect and any one of the first to the fifth possible implementation manners of the first aspect, in a sixth possible implementation manner, before the receiving, by a base station, a data packet sent from UE, the method further includes: forwarding, by the base station, a paging message from the RNC to the UE, where the paging message includes a third fast transmission indication, and the third fast transmission indication is used to trigger the UE to use the fast transmission procedure to perform the data transmission.

According to the sixth possible implementation manner of the first aspect, in a seventh possible implementation manner, the third fast transmission indication is included in a paging cause field of the paging message or included in a high-speed downlink shared channel radio network temporary identifier (H-RNTI) corresponding to the paging message.

According to a second aspect, an example useful for understanding the invention provides a data transmission method, including: receiving, by a radio network controller (RNC) by using a base station, a data packet sent from user equipment (UE), where the data packet includes a second fast transmission indication, and the second fast transmission indication is used to indicate that a fast transmission procedure is used to perform data transmission of the data packet; and establishing or activating, by the RNC, a data transmission bearer.

In a first possible implementation manner of the second aspect, the receiving, by an RNC by using a base station, a data packet sent from UE, where the data packet includes a second fast transmission indication includes: receiving, by the RNC, a random access channel (RACH) data frame sent from the base station, where the second fast transmission indication is a transmission manner identifier included in the RACH DATA FRAME; or receiving, by the RNC, an enhanced data channel (E-DCH) DATA FRAME sent from the base station, where the second fast transmission indication is a resource identifier and/or a transmission manner identifier that are/is included in the E-DCH DATA FRAME, or an E-RNTI included in the E-DCH DATA FRAME, or an E-RNTI and a data packet type identifier that are included in the E-DCH DATA FRAME. According to the second aspect or the first possible implementation manner of the second aspect, in a second possible implementation manner, the data packet further includes a user identifier of the UE, or the data packet further includes a user identifier of the UE and a type of the user identifier.

According to the second possible implementation manner of the second aspect, in a third possible implementation manner, the user identifier is a universal mobile telecommunications system terrestrial radio access network radio network temporary identifier (U-RNTI), or a cell radio network temporary identifier (C-RNTI), or an IMSI, or a TMSI.

According to the second or the third possible implementation manner of the second aspect, in a fourth possible implementation manner, the user identifier is carried in a MAC-d header, or a MAC-c header, or a MAC-i header.

According to the second aspect and any one of the first to fourth possible implementation manners of the second aspect, in a fifth possible implementation manner, before the receiving, by an RNC, a data packet sent from UE, the method further includes: sending, by the RNC, a paging message to the UE, where the paging message includes a third fast transmission indication, and the third fast transmission indication is used to trigger the UE to use the fast transmission procedure to perform data transmission.

According to the fifth possible implementation manner of the second aspect, in a sixth possible implementation manner, the fast transmission indication is included in a paging cause field of the paging message or included in an H-RNTI corresponding to the paging message.

According to the second aspect and any one of the first to the sixth possible implementation manners of the second aspect, in a seventh possible implementation manner, after the receiving, by an RNC, a data packet sent from UE, the method further includes: sending, by the RNC, a downlink data packet to the UE, where the downlink data packet includes the user identifier of the UE.

According to the seventh possible implementation manner of the second aspect, in an eighth possible implementation manner, the user identifier included in the downlink data packet is carried in the MAC-d header or the MAC-c header.

According to the seventh possible implementation manner of the second aspect, in a ninth possible implementation manner, the sending, by the RNC, a downlink data packet to the UE, where the downlink data packet includes the user identifier of the UE includes: sending, by the RNC, the downlink data packet to the UE by using an HS-DSCH, where the user identifier is carried in the MAC-d header or the MAC-c header, or carried in a MAC-ehs header.

According to the second aspect and any one of the first to the ninth possible implementation manners of the second aspect, in a tenth possible implementation manner, before the receiving, by an RNC, a data packet sent from UE, the method further includes: sending, by the RNC, a system information block (SIB) message to the UE, where the SIB message carries bearer configuration information of the data transmission, so that the UE sends the data packet to the base station according to the bearer configuration information.

According to the second aspect and any one of the first to the tenth possible implementation manners of the second aspect, in an eleventh possible implementation manner, after the receiving, by an RNC, a data packet sent from user equipment (UE), the method further includes: sending, by the RNC, a synchronization message to the UE, so that the UE releases the data transmission bearer according to the synchronization message.

According to a third aspect, an example useful for understanding the invention provides a data transmission method, including: sending, by user equipment (UE), access information to a base station to acquire a transmission resource; and sending, by the UE, a data packet to the base station by using the transmission resource; where the access information or the data packet includes a first fast transmission indication, so that the base station determines, according to the first fast transmission indication, that the UE performs data transmission by using a fast transmission procedure.

In a first possible implementation manner of the third aspect, the first fast transmission indication included in the access information includes: at least one of an access signature, PRACH channelization code, and an access timeslot.

In a second possible implementation manner of the third aspect, the first fast transmission indication included in the data packet includes: spare bits spare bits in a Media Access Control message header (MAC-i header) 0 in the data packet or an enhanced data channel radio network temporary identifier (E-RNTI) in a MAC-i header 0 in the data packet.

According to the third aspect and the first or the second possible implementation manner of the third aspect, in a third possible implementation manner, the data packet further includes a user identifier of the UE, or the data packet further includes a user identifier of the UE and a type of the user identifier.

According to the third possible implementation manner of the third aspect, in a fourth possible implementation manner, the user identifier is a U-RNTI, or a C-RNTI, or an IMSI, or a TMSI. According to the third or the fourth possible implementation manner of the third aspect, in a fifth possible implementation manner, the user identifier is carried in a MAC-d header, or a MAC-c header, or a MAC-i header.

According to the third aspect and any one of the first to the fifth possible implementation manners of the third aspect, in a sixth possible implementation manner, before the sending, by UE, access information to a base station to acquire a transmission resource, the method further includes: receiving, by the UE, a paging message sent from an RNC, where the paging message includes a third fast transmission indication, and the third fast transmission indication is used to trigger the UE to use the fast transmission procedure to perform the data transmission.

According to the sixth possible implementation manner of the third aspect, in a seventh possible implementation manner, the third fast transmission indication is included in a paging cause field of the paging message or included in an H-RNTI corresponding to the paging message.

According to the third aspect and any one of the first to the seventh possible implementation manners of the third aspect, in an eighth possible implementation manner, after the sending, by the UE, a data packet to the base station by using the transmission resource, the method further includes: receiving, by the UE, a downlink data packet that is sent from the RNC by using the base station, where the downlink data packet includes the user identifier of the UE.

According to the eighth possible implementation manner of the third aspect, in a ninth possible implementation manner, the user identifier included in the downlink data packet is carried in the MAC-d header or the MAC-c header.

According to the ninth possible implementation manner of the third aspect, in a tenth possible implementation manner, the receiving, by the UE, a downlink data packet that is sent from the RNC by using the base station, where the downlink data packet includes the user identifier of the UE includes: receiving, by the UE by using an HS-DSCH, the downlink data packet sent from the RNC to the UE, where the user identifier is carried in the MAC-d header or the MAC-c header, or carried in a MAC-ehs header.

According to the third aspect and any one of the first to the tenth possible implementation manners of the third aspect, in an eleventh possible implementation manner, after the sending, by the UE, a data packet to the base station by using the transmission resource, the method further includes: receiving, by the UE, a system information block (SIB) message sent from the RNC, where the SIB message carries bearer configuration information of the data transmission; and the sending, by the UE, a data packet to the base station by using the transmission resource includes: sending, by the UE, the data packet to the base station according to the bearer configuration information by using the transmission resource.

According to the third aspect and any one of the first to the eleventh possible implementation manners of the third aspect, in a twelfth possible implementation manner, after the sending, by the UE, a data packet to the base station by using the transmission resource, the method further includes: receiving, by the UE, a synchronization message that is sent from the RNC by using the base station, and releasing a data transmission bearer according to the synchronization message.

According to a fourth aspect, an example useful for understanding the invention provides a data transmission apparatus, including: a receiving module, configured to receive a data packet sent from user equipment (UE); and a sending module, configured to send the data packet to a radio network controller (RNC), where the data packet includes a second fast transmission indication, and the second fast transmission indication is used to indicate that a fast transmission procedure is used to perform data transmission of the data packet.

In a first possible implementation of the fourth aspect, the receiving module is further configured to: before receiving the data packet sent from the UE, receive access information sent from the UE, where the access information includes a first fast transmission indication, and the first fast transmission indication is used to indicate that the UE performs data transmission by using the fast transmission procedure.

According to the first possible implementation manner of the fourth aspect, in a second possible implementation manner, the first fast transmission indication includes at least one of an access signature, a physical random access channel (PRACH) channelization code, and an access timeslot.

In a third possible implementation of the fourth aspect, the receiving module is specifically configured to: receive a data packet that is sent from the UE and that includes a first fast transmission indication, where the first fast transmission indication is used to indicate that the UE performs data transmission by using the fast transmission procedure.

According to the third possible implementation manner of the fourth aspect, in a fourth possible implementation manner, the first fast transmission indication is spare bits spare bits in a Media Access Control message header (MAC-i header) 0 in the data packet or is an enhanced data channel radio network temporary identifier (E-RNTI) in a MAC-i header 0 in the data packet.

According to the fourth aspect and any one of the first to the fourth possible implementation manners of the fourth aspect, in a fifth possible implementation manner, the sending module is specifically configured to: send a random access channel (RACH) data frame to the RNC, where the second fast transmission indication is a transmission manner identifier included in the RACH DATA FRAME; or send an enhanced data channel (E-DCH) DATA FRAME to the RNC, where the second fast transmission indication is a resource identifier and/or a transmission manner identifier that are/is included in the E-DCH DATA FRAME, or an E-RNTI in the E-DCH DATA FRAME, or an E-RNTI and a data packet type flag that are in the E-DCH DATA FRAME.

According to the fourth aspect and any one of the first to fifth possible implementation manners of the fourth aspect, in a sixth possible implementation manner, the apparatus further includes: a forwarding module, configured to, before the data packet sent from the UE is received, forward a paging message from the RNC to the UE, where the paging message includes a third fast transmission indication, and the third fast transmission indication is used to trigger the UE to use the fast transmission procedure to perform the data transmission.

According to the sixth possible implementation manner of the fourth aspect, in a seventh possible implementation manner, the third fast transmission indication is included in a paging cause field of the paging message or included in a high-speed downlink shared channel radio network temporary identifier (H-RNTI) corresponding to the paging message.

According to a fifth aspect, an example useful for understanding the invention provides a data transmission apparatus, including: a receiving module, configured to receive, by using a base station, a data packet sent from user equipment (UE), where the data packet includes a second fast transmission indication, and the second fast transmission indication is used to indicate that a fast transmission procedure is used to perform data transmission of the data packet; and a bearer module, configured to establish or activate a data transmission bearer.

In a first possible implementation of the fifth aspect, the receiving module is specifically configured to: receive a random access channel (RACH) data frame sent from the base station, where the second fast transmission indication is a transmission manner identifier included in the RACH DATA FRAME; or receive an enhanced data channel (E-DCH) DATA FRAME sent from the base station, where the second fast transmission indication is a resource identifier and/or a transmission manner identifier that are/is included in the E-DCH DATA FRAME, or an E-DCH radio network temporary identifier (E-RNTI) included in the E-DCH DATA FRAME, or an E-RNTI and a data packet type identifier that are included in the E-DCH DATA FRAME.

According to the fifth aspect or the first possible implementation manner of the fifth aspect, in a second possible implementation manner, the data packet further includes a user identifier of the UE, or the data packet further includes a user identifier of the UE and a type of the user identifier.

According to the second possible implementation manner of the fifth aspect, in a third possible implementation manner, the user identifier is a universal mobile telecommunications system terrestrial radio access network radio network temporary identifier (U-RNTI), or a cell radio network temporary identifier (C-RNTI), or an IMSI, or a TMSI.

According to the second or the third possible implementation manner of the fifth aspect, in a fourth possible implementation manner, the user identifier is carried in a MAC-d header, or a MAC-c header, or a MAC-i header.

According to the fifth aspect and any one of the first to fourth possible implementation manners of the fifth aspect, in a fifth possible implementation manner, a sending module, configured to, before the data packet sent from the UE is received, send a paging message to the UE, where the paging message includes a third fast transmission indication, and the third fast transmission indication is used to trigger the UE to use the fast transmission procedure to perform the data transmission.

According to the fifth possible implementation manner of the fifth aspect, in a sixth possible implementation manner, the fast transmission indication is included in a paging cause field of the paging message or included in a high-speed downlink shared channel radio network temporary identifier (H-RNTI) corresponding to the paging message.

According to the fifth aspect and any one of the first to the sixth possible implementation manners of the fifth aspect, in a seventh possible implementation manner, the sending module is further configured to: after the data packet sent from the UE is received, send a downlink data packet to the UE, where the downlink data packet includes the user identifier of the UE.

According to the seventh possible implementation manner of the fifth aspect, in an eighth possible implementation manner, the user identifier included in the downlink data packet is carried in the MAC-d header or the MAC-c header.

According to the seventh possible implementation manner of the fifth aspect, in a ninth possible implementation manner, the sending module is specifically configured to: send the downlink data packet to the UE by using an HS-DSCH, where the user identifier is carried in the MAC-d header or the MAC-c header, or carried in a MAC-ehs header.

According to the fifth aspect and any one of the first to the ninth possible implementation manners of the fifth aspect, in a tenth possible implementation manner, the sending module is further configured to: before the data packet sent from the UE is received, send a system information block (SIB) message to the UE, where the SIB message carries bearer configuration information of the data transmission, so that the UE sends the data packet to the base station according to the bearer configuration information.

According to the fifth aspect and any one of the first to the tenth possible implementation manners of the fifth aspect, in an eleventh possible implementation manner, the sending module is further configured to: after the data packet sent from the user equipment (UE) is received, send a synchronization message to the UE, so that the UE releases the data transmission bearer according to the synchronization message.

According to a sixth aspect, an example useful for understanding the invention provides a data transmission apparatus, including: a resource acquiring module, configured to send access information to a base station to acquire a transmission resource; and a sending module, configured to send a data packet to the base station by using the transmission resource; where the access information or the data packet includes a first fast transmission indication, so that the base station determines, according to the first fast transmission indication, that the UE performs data transmission by using a fast transmission procedure.

In a first possible implementation manner of the sixth aspect, the first fast transmission indication included in the access information includes: at least one of an access signature, physical random access channel (PRACH) channelization code, and an access timeslot.

In a second possible implementation manner of the sixth aspect, the first fast transmission indication included in the data packet includes: spare bits spare bits in a Media Access Control message header (MAC-i header) 0 in the data packet or an enhanced data channel radio network temporary identifier (E-RNTI) in a MAC-i header 0 in the data packet.

According to the sixth aspect and the first or the second possible implementation manner of the sixth aspect, in a third possible implementation manner, the data packet further includes a user identifier of the UE, or the data packet further includes a user identifier of the UE and a type of the user identifier.

According to the third possible implementation manner of the sixth aspect, in a fourth possible implementation manner, the user identifier is a universal mobile telecommunications system terrestrial radio access network radio network temporary identifier (U-RNTI), or a cell radio network temporary identifier (C-RNTI), or an IMSI, or a TMSI.

According to the third or the fourth possible implementation manner of the sixth aspect, in a fifth possible implementation manner, the user identifier is carried in a MAC-d header, or a MAC-c header, or a MAC-i header.

According to the sixth aspect and any one of the first to fifth possible implementation manners of the sixth aspect, in a sixth possible implementation manner, the apparatus further includes: a receiving module, configured to, before the access information is sent to the base station to acquire the transmission resource, receive a paging message sent from an RNC, where the paging message includes a third fast transmission indication, and the third fast transmission indication is used to trigger the UE to use the fast transmission procedure to perform the data transmission.

According to the sixth possible implementation manner of the sixth aspect, in a seventh possible implementation manner, the third fast transmission indication is included in a paging cause field of the paging message or included in an H-RNTI corresponding to the paging message.

According to the sixth aspect and any one of the first to the seventh possible implementation manners of the sixth aspect, in an eighth possible implementation manner, the receiving module is further configured to: after the data packet is sent to the base station by using the transmission resource, receive a downlink data packet that is sent from the RNC by using the base station, where the downlink data packet includes the user identifier of the UE.

According to the eighth possible implementation manner of the sixth aspect, in a ninth possible implementation manner, the user identifier included in the downlink data packet is carried in the MAC-d header or the MAC-c header.

According to the ninth possible implementation manner of the sixth aspect, in a tenth possible implementation manner, the receiving module is specifically configured to: receive, by using an HS-DSCH, the downlink data packet sent from the RNC to the UE, where the user identifier is carried in the MAC-d header or the MAC-c header, or carried in a MAC-ehs header.

According to the sixth aspect and any one of the first to the tenth possible implementation manners of the sixth aspect, in an eleventh possible implementation manner, the receiving module is further configured to: before the data packet is sent to the base station by using the transmission resource, receive a system information block (SIB) message sent from the RNC, where the SIB message carries bearer configuration information of the data transmission; where the sending module is specifically configured to: send the data packet to the base station according to the bearer configuration information by using the transmission resource.

According to the sixth aspect and any one of the first to the eleventh possible implementation manners of the sixth aspect, in a twelfth possible implementation manner, the receiving module is further configured to: after the data packet is sent to the base station by using the transmission resource, receive a synchronization message that is sent from the RNC by using the base station, and release a data transmission bearer according to the synchronization message.

According to a seventh aspect, an example useful for understanding the invention provides a base station, including: a receiver, configured to receive a data packet sent from user equipment (UE); and a transmitter, configured to send the data packet to a radio network controller (RNC), where the data packet includes a second fast transmission indication, and the second fast transmission indication is used to indicate that a fast transmission procedure is used to perform data transmission of the data packet.

In a first possible implementation manner of the seventh aspect, the receiver is further configured to: before receiving the data packet sent from the UE, receive access information sent from the UE, where the access information includes a first fast transmission indication, and the first fast transmission indication is used to indicate that the UE performs data transmission by using the fast transmission procedure.

According to the first possible implementation manner of the seventh aspect, in a second possible implementation manner, the first fast transmission indication includes at least one of an access signature, a physical random access channel (PRACH) channelization code, and an access timeslot.

In a third possible implementation manner of the seventh aspect, the receiver is specifically configured to: receive a data packet that is sent from the UE and that includes a first fast transmission indication, where the first fast transmission indication is used to indicate that the UE performs data transmission by using the fast transmission procedure.

According to the third possible implementation manner of the seventh aspect, in a fourth possible implementation manner, the first fast transmission indication is spare bits spare bits in a Media Access Control message header (MAC-i header) 0 in the data packet or is an enhanced data channel radio network temporary identifier (E-RNTI) in a MAC-i header 0 in the data packet.

According to the seventh aspect and any one of the first to the fourth possible implementation manners of the seventh aspect, in a fifth possible implementation manner, the transmitter is specifically configured to: send a random access channel (RACH) data frame to the RNC, where the second fast transmission indication is a transmission manner identifier included in the RACH DATA FRAME; or send an enhanced data channel (E-DCH) DATA FRAME to the RNC, where the second fast transmission indication is a resource identifier and/or a transmission manner identifier that are/is included in the E-DCH DATA FRAME, or an E-RNTI in the E-DCH DATA FRAME, or an E-RNTI and a data packet type flag that are in the E-DCH DATA FRAME.

According to the seventh aspect and any one of the first to the fifth possible implementation manners of the seventh aspect, in a sixth possible implementation manner, the transmitter is further configured to: before the data packet sent from the UE is received, forward a paging message from the RNC to the UE, where the paging message includes a third fast transmission indication, and the third fast transmission indication is used to trigger the UE to use the fast transmission procedure to perform the data transmission.

According to the sixth possible implementation manner of the seventh aspect, in a seventh possible implementation manner, the third fast transmission indications is included in a paging cause field of the paging message or included in a high-speed downlink shared channel radio network temporary identifier (H-RNTI) corresponding to the paging message.

According to an eighth aspect, an example useful for understanding the invention provides a radio network controller (RNC), including: a receiver, configured to receive, by using a base station, a data packet sent from user equipment (UE), where the data packet includes a second fast transmission indication, and the second fast transmission indication is used to indicate that a fast transmission procedure is used to perform data transmission of the data packet; and a processor, configured to establish or activate a data transmission bearer.

In a first possible implementation manner of the eighth aspect, the receiver is specifically configured to: receive a random access channel (RACH) data frame sent from the base station, where the second fast transmission indication is a transmission manner identifier included in the RACH DATA FRAME; or receive an enhanced data channel (E-DCH) DATA FRAME sent from the base station, where the second fast transmission indication is a resource identifier and/or a transmission manner identifier that are/is included in the E-DCH DATA FRAME, or an E-DCH radio network temporary identifier (E-RNTI) included in the E-DCH DATA FRAME, or an E-RNTI and a data packet type identifier that are included in the E-DCH DATA FRAME.

According to the eighth aspect or the first possible implementation manner of the eighth aspect, in a second possible implementation manner, the data packet further includes a user identifier of the UE, or the data packet further includes a user identifier of the UE and a type of the user identifier.

According to the second possible implementation manner of the eighth aspect, in a third possible implementation manner, the user identifier is a universal mobile telecommunications system terrestrial radio access network radio network temporary identifier (U-RNTI), or a cell radio network temporary identifier (C-RNTI), or an IMSI, or a TMSI.

According to the second or the third possible implementation manner of the eighth aspect, in a fourth possible implementation manner, the user identifier is carried in a MAC-d header, or a MAC-c header, or a MAC-i header.

According to the eighth aspect and any one of the first to fourth possible implementation manners of the eighth aspect, in a fifth possible implementation manner, the RNC further includes: a transmitter, configured to, before the data packet sent from the UE is received, send a paging message to the UE, where the paging message includes a third fast transmission indication, and the third fast transmission indication is used to trigger the UE to use the fast transmission procedure to perform the data transmission.

According to the fifth possible implementation manner of the eighth aspect, in a sixth possible implementation manner, the fast transmission indication is included in a paging cause field of the paging message or included in a high-speed downlink shared channel radio network temporary identifier (H-RNTI) corresponding to the paging message.

According to the eighth aspect and any one of the first to the sixth possible implementation manners of the eighth aspect, in a seventh possible implementation manner, the transmitter is further configured to: after the data packet sent from the UE is received, send a downlink data packet to the UE, where the downlink data packet includes the user identifier of the UE. According to the seventh possible implementation manner of the eighth aspect, in an eighth possible implementation manner, the user identifier included in the downlink data packet is carried in the MAC-d header or the MAC-c header.

According to the seventh possible implementation manner of the eighth aspect, in a ninth possible implementation manner, the transmitter is specifically configured to: send the downlink data packet to the UE by using an HS-DSCH, where the user identifier is carried in the MAC-d header or the MAC-c header, or carried in a MAC-ehs header.

According to the eighth aspect and any one of the first to the ninth possible implementation manners of the eighth aspect, in a tenth possible implementation manner, the transmitter is further configured to: before the data packet sent from the UE is received, send a system information block (SIB) message to the UE, where the SIB message carries bearer configuration information of the data transmission, so that the UE sends the data packet to the base station according to the bearer configuration information.

According to the eighth aspect and any one of the first to the tenth possible implementation manners of the eighth aspect, in an eleventh possible implementation manner, the transmitter is further configured to: after the data packet sent from the user equipment (UE) is received, send a synchronization message to the UE, so that the UE releases the data transmission bearer according to the synchronization message.

According to a ninth aspect, an example useful for understanding the invention provides user equipment (UE), including: a processor, configured to send access information to a base station to acquire a transmission resource; and a transmitter, configured to send a data packet to the base station by using the transmission resource; where the access information or the data packet includes a first fast transmission indication, so that the base station determines, according to the first fast transmission indication, that the UE performs data transmission by using a fast transmission procedure.

In a first possible implementation manner of the ninth aspect, the first fast transmission indication included in the access information includes: at least one of an access signature, physical random access channel (PRACH) channelization code, and an access timeslot.

In a second possible implementation manner of the ninth aspect, the first fast transmission indication included in the data packet includes: spare bits spare bits in a Media Access Control message header (MAC-i header) 0 in the data packet or an enhanced data channel radio network temporary identifier (E-RNTI) in a MAC-i header 0 in the data packet.

According to the ninth aspect and the first or the second possible implementation manner of the ninth aspect, in a third possible implementation manner, the data packet further includes a user identifier of the UE, or the data packet further includes a user identifier of the UE and a type of the user identifier.

According to the third possible implementation manner of the ninth aspect, in a fourth possible implementation manner, the user identifier is a universal mobile telecommunications system terrestrial radio access network radio network temporary identifier (U-RNTI), or a cell radio network temporary identifier (C-RNTI), or an IMSI, or a TMSI.

According to the third or the fourth possible implementation manner of the ninth aspect, in a fifth possible implementation manner, the user identifier is carried in a MAC-d header, or a MAC-c header, or a MAC-i header.

According to the ninth aspect and any one of the first to fifth possible implementation manners of the ninth aspect, in a sixth possible implementation manner, the UE further includes: a receiver, configured to, before the access information is sent to the base station to acquire the transmission resource, receive a paging message sent from an RNC, where the paging message includes a third fast transmission indication, and the third fast transmission indication is used to trigger the UE to use the fast transmission procedure to perform the data transmission.

According to the sixth possible implementation manner of the ninth aspect, in a seventh possible implementation manner, the third fast transmission indication is included in a paging cause field of the paging message or included in an H-RNTI corresponding to the paging message.

According to the ninth aspect and any one of the first to the seventh possible implementation manners of the ninth aspect, in an eighth possible implementation manner, the receiver is further configured to: after the data packet is sent to the base station by using the transmission resource, receive a downlink data packet that is sent from the RNC by using the base station, where the downlink data packet includes the user identifier of the UE.

According to the eighth possible implementation manner of the ninth aspect, in a ninth possible implementation manner, the user identifier included in the downlink data packet is carried in the MAC-d header or the MAC-c header.

According to the ninth possible implementation manner of the ninth aspect, in a tenth possible implementation manner, the receiver is specifically configured to: receive, by using an HS-DSCH, the downlink data packet sent from the RNC to the UE, where the user identifier is carried in the MAC-d header or the MAC-c header, or carried in a MAC-ehs header.

According to the ninth aspect and any one of the first to the tenth possible implementation manners of the ninth aspect, in an eleventh possible implementation manner, the receiver is further configured to: before the data packet is sent to the base station by using the transmission resource, receive a system information block (SIB) message sent from the RNC, where the SIB message carries bearer configuration information of the data transmission; where the transmitter is specifically configured to: send the data packet to the base station according to the bearer configuration information by using the transmission resource.

According to the ninth aspect and any one of the first to the eleventh possible implementation manners of the ninth aspect, in a twelfth possible implementation manner, the receiver is further configured to: after the data packet is sent to the base station by using the transmission resource, receive a synchronization message that is sent from the RNC by using the base station, and release a data transmission bearer according to the synchronization message.

In the embodiments of the present invention, UE sends access information or a data packet to a base station, where the access information or the data packet carries a first fast transmission indication, so that the base station identifies that the UE sends the data packet in a fast transmission manner; and the data packet carries a second fast transmission indication when the base station sends the data packet to an RNC, so that the RNC determines that the data packet is sent in the fast transmission manner, and the data packet is received according to a fast transmission procedure. In this way, a process of establishing a data transmission channel by using multiple pieces of user plane signaling can be avoided, thereby greatly simplifying a data transmission procedure and improving data transmission efficiency.

### BRIEF DESCRIPTION OF DRAWINGS

FIG. 1 is a flowchart of Embodiment 1 of a data transmission method according to the present invention;
FIG. 2 is a flowchart of Embodiment 2 of a data transmission method according to the present invention;
FIG. 3 is a flowchart of Embodiment 3 of a data transmission method according to the present invention;
FIG. 4 is a signaling flowchart of Embodiment 4 of a data transmission method according to the present invention;
FIG. 5 is a schematic structural diagram of Embodiment 1 of a data transmission apparatus according to the present invention;
FIG. 6 is a schematic structural diagram of Embodiment 2 of a data transmission apparatus according to the present invention;
FIG. 7 is a schematic structural diagram of Embodiment 3 of a data transmission apparatus according to the present invention;
FIG. 8 is a schematic structural diagram of Embodiment 4 of a data transmission apparatus according to the present invention;
FIG. 9 is a schematic structural diagram of Embodiment 5 of a data transmission apparatus according to the present invention;
FIG. 10 is a schematic structural diagram of Embodiment 6 of a data transmission apparatus according to the present invention;
FIG. 11 is a schematic structural diagram of Embodiment 1 of a base station according to the present invention;
FIG. 12 is a schematic structural diagram of Embodiment 1 of an RNC according to the present invention;
FIG. 13 is a schematic structural diagram of Embodiment 1 of UE according to the present invention; and
FIG. 14 is a schematic structural diagram of an embodiment of a communications system according to the present invention.

### DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

Network element entities involved in the embodiments of the present invention area base station, a radio network controller (RNC) or a base station controller (Base Station Controller, BSC for short), and user equipment (UE), where the UE may be any terminal device that has a radio communications function, for example, a mobile phone, a smartphone, a notebook computer, or a card-reading device. A method in the embodiments of the present invention may be applied to various types of communications systems, such as a Global System for Mobile Communications (Global System for Mobile communications, GSM for short), Code Division Multiple Access (Code Division Multiple Access, CDMA for short), Wideband Code Division Multiple Access (Wideband Code Division Multiple Access, WCDMA for short), a Universal Mobile Telecommunications System (Universal Mobile Telecommunications System, UMTS for short), and Long Term Evolution (Long Term Evolution, LTE for short).

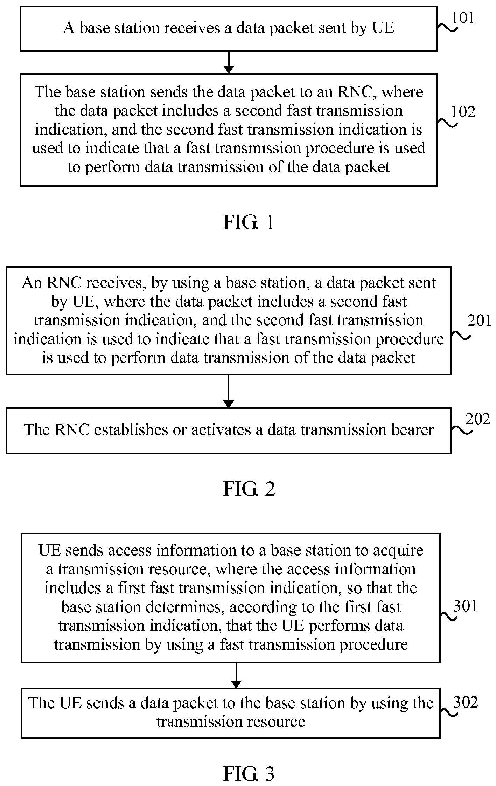

FIG. 1 is a flowchart of Embodiment 1 of a data transmission method according to the present invention, and an execution body in this embodiment is a base station. As shown in FIG. 1, the method in this embodiment may include:
Step 101: The base station receives a data packet sent from UE.
Step 102: The base station sends the data packet to an RNC, where the data packet includes a second fast transmission indication, and the second fast transmission indication is used to indicate that a fast transmission procedure is used to perform data transmission of the data packet.

The fast transmission procedure refers to a procedure for fast transmitting a data packet. In the procedure, unlike an existing procedure, it is unnecessary to establish, by means of interaction of multiple pieces of signaling, a data transmission channel among the UE, the base station, and the RNC to transmit the data packet; instead, the data packet is directly sent, and the second fast transmission indication and a first fast transmission indication that is in a subsequent embodiment are used to indicate that the fast data transmission procedure is used to transmit the data packet.

Specifically, in step 102, the data packet sent from the base station to the RNC includes the second fast transmission indication, which is used for the RNC to determine that the data packet is sent in a fast transmission manner, and optionally, may also be used to trigger the RNC to activate or establish a transmission bearer corresponding to the data packet transmission.

In the prior art, a common data transmission process is that a data transmission channel is established among the UE, the base station, and the RNC by using multiple pieces of control plane signaling and multiple pieces of user plane signaling, and data is transmitted through the data transmission channel. However, in this embodiment of the present invention, by using a manner in which the first fast transmission indication and the second fast transmission indication are carried in the transmission process, the base station and the RNC transmit the data in the fast transmission manner. The fast transmission manner is particularly applicable to a scenario of transmitting a small data packet.

In this embodiment, the data packet sent from the base station to the RNC carries the second fast transmission indication, so that the RNC determines that the data packet is sent in the fast transmission manner; optionally, the second fast transmission indication may also trigger the RNC to activate or establish the transmission bearer corresponding to the data packet transmission. In this way, a process of establishing a data transmission channel by using multiple pieces of user plane signaling can be avoided, thereby simplifying a data transmission procedure and improving data transmission efficiency.

In the foregoing embodiment, the data packet sent from the UE and received by the base station in step 101 may include the first fast transmission indication, or access information sent from the UE and received by the base station before step 101 may include the first fast transmission indication. The base station may determine, according to the first fast transmission indication, that the UE sends data in the fast transmission manner, so as to carry the second fast transmission indication in the data packet sent to the RNC.

It should be noted that, the method in this embodiment may be used to transmit multiple data packets. The foregoing second fast transmission indication and first fast transmission indication may be carried in a first data packet when the first data packet is transmitted. After the UE, the base station, and the RNC all confirm that the fast transmission manner is used, the second fast transmission indication and the first fast transmission indication may no longer be carried in a subsequent data packet transmission process.

Further, in an implementation manner, before the base station receives the data packet sent from the UE in step 101, the method further includes: receiving, by the base station, access information sent from the UE, where the access information includes a first fast transmission indication, and the first fast transmission indication is used to indicate that the UE performs data transmission by using the fast transmission procedure.

The first fast transmission indication includes at least one of an access signature, PRACH channelization code, and an access timeslot.

Alternatively, in another implementation manner, that the base station receives a data packet sent from UE in step 101 may include: receiving, by the base station, a data packet that is sent from the UE and that includes a first fast transmission indication, where the first fast transmission indication is used to indicate that the UE performs data transmission by using the fast transmission procedure.

Specifically, the first fast transmission indication may be spare bits spare bits in a Media Access Control (Media Access Control, MAC for short) message header (message header) MAC-i header 0 in the data packet; for example, that the spare bits are non-0000 values is used to indicate that the data packet is sent in the fast transmission manner. Alternatively, the first fast transmission indication may be an enhanced data channel (Enhanced Data Channel, E-DCH for short) radio network temporary identifier (E-DCH Radio Network Temporary Identity, E-RNTI for short) in the MAC-i header 0 in the data packet, where the E-RNTI is used only when the UE uses the fast transmission procedure; for example, for an E-RNTI that is configured on a network side and that is used for small data packet transmission or is used in an MTC related service, information about this identifier may be delivered on the network side by using a system broadcast message. Alternatively, the UE may further use a manner of excluding the MAC-i header 0 to indicate that the data packet is sent in the fast transmission manner. In a conflict detection process after the UE obtains by contention an uplink data sending resource, the UE includes the MAC-i header 0 in a data packet header; therefore, it may be agreed on that when the UE uses the fast transmission procedure, the UE does not need to include the MAC-i header 0 in the data packet header. Correspondingly, when detecting that the data packet does not include a special format of the MAC-i header 0, the base station determines that the UE sends the data packet in the fast transmission manner.

Further, that the base station sends the data packet to an RNC, where the data packet includes a second fast transmission indication in step 102 may include: sending, by the base station, a random access channel (Random Access Channel, RACH for short) data frame to the RNC, where the second fast transmission indication is a transmission manner identifier (for example, Transmission Mode Indicator) included in the RACH DATA FRAME, which is used to indicate whether the fast transmission manner is used, where for example, for a 1-bit (Bit) Transmission Mode Indicator, when the indicator is 1, it indicates that the data packet is sent in the fast transmission manner; or sending, by the base station, an enhanced data channel (Enhanced Data Channel, E-DCH for short) DATA FRAME to the RNC, where the second fast transmission indication is a resource identifier and/or a transmission manner identifier that are/is included in the E-DCH DATA FRAME, or an E-RNTI corresponding to the fast transmission manner and in the E-DCH DATA FRAME, or an E-RNTI and a data packet type flag that are in the E-DCH DATA FRAME. Specifically, the second fast transmission indication may use the following manners.
Manner 1: The base station adds indication information of a transmission manner of the data packet into the E-DCH DATA FRAME; for example, for a 1-bit Transmission Mode Indicator, when the indicator is 1, it indicates that the data packet is sent in the fast transmission manner.
Manner 2: The base station indicates a transmission manner of the data packet by using an E-RNTI field in the E-DCH DATA FRAME; for example, the E-RNTI may be an E-RNTI configured for specially identifying the transmission manner, or may be an E-RNTI corresponding to a transmission resource, or may be a corresponding E-RNTI in MAC-i header 0.
Manner 3: The base station identifies a transmission manner of the data packet by using an E-RNTI and a data packet type that are in the E-DCH DATA FRAME; for example, the data packet received by the RNC is a dedicated transmission channel (Dedicated Transmission Channel, DTCH for short) data packet or a dedicated control channel (Dedicated Control Channel, DCCH for short) data packet, and at the same time, if an E-RNTI in the data packet is a new E-RNTI, it indicates that the data packet is sent in the fast transmission manner.
Manner 4: The base station adds a resource identifier corresponding to the data packet transmission or adds indication information of a transmission manner of the data packet and a resource identifier corresponding to the data packet transmission into the E-DCH DATA FRAME, and indicates, by using the resource identifier or by using the resource identifier and the indication information of the transmission manner of the data packet, that the data packet is sent in the fast transmission manner.

The foregoing RACH DATA FRAME corresponds to a manner of sending, by the UE, the data packet by using a PRACH channel, and the E-DCH DATA FRAME corresponds to a manner of sending, by the UE, the data packet by using an E-DPDCH channel.

It should be noted that, the second fast transmission indication may also perform indication in another manner; correspondingly, the base station may also identify, in another manner, whether the data packet is sent in the fast transmission manner, which is not limited in this embodiment of the present invention.

Further, optionally, in an implementation manner, before step 101, that is, before the base station receives the data packet sent from the UE, the method may further include: forwarding, by the base station, a paging message from the RNC to the UE, where the paging message includes a third fast transmission indication, and the third fast transmission indication is used to trigger the UE to use the fast transmission procedure to perform the data transmission.

The third fast transmission indication may be included in a paging cause field of the paging message or included in a high-speed downlink shared channel (High-Speed Downlink Shared Channel, HS-DSCH for short)radio network temporary identifier (HS-DSCH Radio Network Temporary Identity, H-RNTI for short) corresponding to the paging message. The H-RNTI is configured on a network side to trigger the UE to perform the fast transmission procedure; for example, the H-RNTI is included in a system broadcast message and sent to the UE. When a NodeB sends the paging message to the UE, if an HS-SCCH uses the H-RNTI for masking, the fast transmission procedure of the UE is triggered.

The foregoing paging message is merely an example, and a message that carries the third fast transmission indication may also be any downlink message that can trigger the fast transmission procedure of the UE or any downlink data packet. That the third fast transmission indication is the H-RNTI is merely an example, and the third fast transmission indication may also be another user identifier or transmission manner identifier used for identifying the transmission manner. FIG. 2 is a flowchart of Embodiment 2 of a data transmission method according to the present invention, and an execution body in this embodiment is an RNC. As shown in FIG. 2, the method in this embodiment may include:
Step 201: The RNC receives, by using a base station, a data packet sent from UE, where the data packet includes a second fast transmission indication, and the second fast transmission indication is used to indicate that a fast transmission procedure is used to perform data transmission of the data packet.

Optionally, the second fast transmission indication may also be used to trigger the RNC to activate or establish a transmission bearer corresponding to the data packet transmission.

Step 202: The RNC establishes or activates a data transmission bearer.

Specifically, if a transmission bearer, for example, radio link control (Radio Link Control, RLC for short) that is of the RNC and is dedicated for sending the data packet of the UE is not established, the RNC establishes the transmission bearer in step 202; if the transmission bearer dedicated for the UE has been established but has not been activated, the RNC only needs to activate the transmission bearer in step 202.

It should be noted that, the data transmission method in this embodiment may be used to transmit multiple data packets. After the RNC receives a first data packet and establishes or activates the transmission bearer dedicated for the UE, step 202 may not be performed any more in a subsequent data packet transmission process, and the second fast transmission indication may no longer be carried in the subsequent data packet transmission process, either.

In the prior art, a common data transmission process is that a transmission channel is established among the UE, the base station, and the RNC by using multiple pieces of control plane signaling and multiple pieces of user plane signaling, and data is transmitted through the data transmission channel. However, in this embodiment of the present invention, by using a manner in which the second fast transmission indication is carried in a process in which the base station forwards the data packet from the UE, the RNC is notified that the data packet is transmitted in a fast transmission manner. The fast transmission manner is particularly applicable to a scenario of transmitting a small data packet.

In this embodiment, an RNC receives a data packet that is sent from a base station and carries a second fast transmission indication, and identifies that the data packet is sent in a fast transmission manner, so as to activate or establish a transmission bearer corresponding to the data packet, that is, receive the data packet according to a fast transmission procedure. In this way, a process of establishing a data transmission channel by using multiple pieces of user plane signaling can be avoided, thereby simplifying a data transmission procedure and improving data transmission efficiency.

Further, specifically, that the RNC receives, by using a base station, a data packet sent from UE, where the data packet includes a second fast transmission indication includes: receiving, by the RNC, a random access channel (RACH) data frame sent from the base station, where the second fast transmission indication is a transmission manner identifier (for example, Transmission Mode Indicator) included in the RACH DATA FRAME, where for example, for a 1-bit (Bit) Transmission Mode Indicator, when the indicator is 1, it indicates that the data packet is sent in the fast transmission manner; or receiving, by the RNC, an enhanced data channel (E-DCH) DATA FRAME sent from the base station, where the second fast transmission indication is a resource identifier and/or a transmission manner identifier that are/is included in the E-DCH DATA FRAME, or an E-RNTI included in the E-DCH DATA FRAME, or an E-RNTI and a data packet type identifier that are included in the E-DCH DATA FRAME. Specifically, the second fast transmission indication may use the following manners.

Manner 1: The base station adds indication information of a transmission manner of the data packet into the E-DCH DATA FRAME; for example, for a 1-bit Transmission Mode Indicator, when the indicator is 1, it indicates that the data packet is sent in the fast transmission manner. Manner 2: The base station indicates a transmission manner of the data packet by using an E-RNTI field in the E-DCH DATA FRAME; for example, the E-RNTI may be an E-RNTI configured for specially identifying the transmission manner, or may be an E-RNTI corresponding to a transmission resource, or may be a corresponding E-RNTI in a MAC-i header 0.

Manner 3: The base station identifies a transmission manner of the data packet by using an E-RNTI and a data packet type that are in the E-DCH DATA FRAME; for example, the data packet received by the RNC is a dedicated transmission channel (Dedicated Transmission Channel, DTCH for short) data packet or a dedicated control channel (Dedicated Control Channel, DCCH for short) data packet, and at the same time, if an E-RNTI in the data packet is a new E-RNTI, it indicates that the data packet is sent in the fast transmission manner.

Manner 4: The base station adds a resource identifier corresponding to the data packet transmission or adds indication information of a transmission manner of the data packet and a resource identifier corresponding to the data packet transmission into the E-DCH DATA FRAME, and indicates, by using the resource identifier or by using the resource identifier and the indication information of the transmission manner of the data packet, that the data packet is sent in the fast transmission manner.

It should be noted that, the foregoing RACH DATA FRAME corresponds to a manner of sending, by the UE, the data packet by using a PRACH channel, and the E-DCH DATA FRAME corresponds to a manner of sending, by the UE, the data packet by using an E-DPDCH channel. It should be noted that, the second fast transmission indication may also perform indication in another manner; correspondingly, the base station may also identify, in another manner, whether the data packet is sent in the fast transmission manner, which is not limited in this embodiment of the present invention.

Further, optionally, the data packet may further include a user identifier of the UE, or the data packet may further include a user identifier of the UE and a type of the user identifier.

The user identifier may be a Universal Mobile Telecommunications System (Universal Mobile Telecommunication System, UMTS for short) Terrestrial Radio Access Network (UMTS Terrestrial Radio Access Network, UTRAN for short) radio network temporary identifier (UTRAN Radio Network Temporary Identity, U-RNTI for short), or a cell radio network temporary identifier (Cell Radio Network Temporary Identity, C-RNTI for short), or an International mobile subscriber identity (International Mobile Subscriber Identity, IMSI for short), or a temporary mobile subscriber identity (Temporary Mobile Subscriber Identity, TMSI for short). Alternatively, the user identifier may also use an identifier that is in another form or of another type and can enable a recipient to identify a user, for example, an identifier newly introduced to identify the fast transmission manner,. This embodiment of the present invention constitutes no limitation on a specific form of the user identifier.

Further, the user identifier, or the user identifier and the type of the user identifier may be carried in a MAC-d header, or a MAC-c header, or a MAC-i header.

For example, when an uplink data packet is sent from using an RACH, the RNC may distinguish, by using an identifier in a MAC header, UE corresponding to the data packet. Specifically, a MAC header of the data packet includes two fields, that is, a user identifier type (UE-ID type) field and a user identifier (UE-ID) field.

When the UE has the U-RNTI or the C-RNTI, the U-RNTI or the C-RNTI of the UE may be filled in the UE-ID field. When the UE uses a user identifier of another type, the user identifier type of the UE may be filled in the UE-ID type field, and the user identifier of the UE may be filled in the UE-ID field. For example, a type of a user identifier is 10 (UE-ID type=10), and then the user identifier in the UE-ID field is the IMSI or the TMSI.

Further, when the user identifier is included in the MAC-i header, the user identifier may be an identifier generated by the UE, for example, a random number generated by the UE.

Further, the user identifier may also be included in the data packet sent from the UE to the RNC; for example, the user identifier is used as content of the data packet sent from the UE to the RNC.

It should be noted that, the foregoing method for sending, by the UE, the uplink data packet to the RNC, and including, in the uplink data packet, the user identifier of the UE or the user identifier of the UE and the identifier type may be independently applied to a scenario of sending, by the UE, the uplink data packet to the RNC. In addition, the method may be used in a scenario in which data transmission is performed by using the fast transmission procedure, or may be applied to a scenario in which data transmission is performed by using a common procedure or another data transmission procedure.

Further, in an implementation manner, before the RNC receives the data packet sent from the UE, the method may further include: sending, by the RNC, a paging message to the UE, where the paging message includes a third fast transmission indication, and the third fast transmission indication is used to trigger the UE to use the fast transmission procedure to perform the data transmission.

The fast transmission indication may be included in a paging cause field of the paging message, or may be included in an H-RNTI corresponding to the paging message, where the H-RNTI is configured on a network side to trigger the UE to perform the fast transmission procedure; for example, the H-RNTI is included in a system broadcast message and sent to the UE. When a NodeB sends the paging message to the UE, if an HS-SCCH uses the H-RNTI for masking, the fast transmission procedure of the UE is triggered.

The foregoing paging message is merely an example, and a message that carries the third fast transmission indication may also be any downlink message that can trigger the fast transmission procedure of the UE or any downlink data packet. That the third fast transmission indication is the H-RNTI is merely an example, and the third fast transmission indication may also be another user identifier or transmission manner identifier used for identifying the transmission manner. Further, after the RNC receives the data packet sent from the UE, the method may further include: sending, by the RNC, a downlink data packet to the UE, where the downlink data packet includes the user identifier of the UE.

The downlink data packet may include feedback information that is sent from the RNC to the UE and is dedicated for the uplink data packet sent from the UE, or a data packet sent from the network side to the UE. For example, the uplink data packet sent from the UE is sent in an RLC-acknowledge mode (RLC-Acknowledge Mode, RLC-AM for short). Then, after receiving the uplink data packet, the RNC detects, at an RLC layer, whether the uplink data packet is correct, and sends feedback information of the RLC layer to the UE according to a preset rule, for example, according to a specified time period.

Further, specifically, the user identifier included in the downlink data packet may be carried in a MAC-d header or a MAC-c header.

Specifically, the RNC may add the user identifier (UE-ID) field into a MAC-d header or a MAC-c header of the downlink data packet sent to the UE, and optionally, may add the user identifier type (UE-ID type) field. In addition, when sending the downlink data packet to the UE, the RNC may use, in a high-speed signaling control channel (High-Speed Signaling Control Channel, HS-SCCH for short), a special HS-DSCH radio network temporary identifier (Special HS-DSCH Radio Network Temporary Identity, H-RNTI for short) to perform masking.

Further, when the downlink data packet is sent from using a high-speed downlink shared channel (High-Speed Downlink Shared Channel, HS-DSCH for short), the user identifier may be further carried in a MAC-ehs header. In addition, when sending the downlink data packet to the UE, the RNC may also use, in the HS-SCCH, the special H-RNTI to perform masking.

The special H-RNTI may be an H-RNTI configured for UE that sends a data packet in the fast transmission manner. When the UE detects the H-RNTI, the UE may determine that a MAC-d header or a MAC-c header in a data packet subsequently received through an HS-PDSCH channel includes an identifier of the UE, or a MAC-ehs header in the data packet includes the identifier of the UE.

Further, when the downlink data packet is sent from using the HS-DSCH, the user identifier may be further carried in the HS-SCCH. The user identifier may be a random number generated and reported by the UE to the network side. For example, when sending uplink data packet, the UE generates a 24-digit random number, and the random number is included in a MAC-i header and sent to the base station. When the base station receives downlink data packet sent from the RNC and dedicated for the UE, the base station may use the foregoing random number or a value derived from the foregoing random number as the identifier of the UE so as to perform masking on the HS-SCCH.

The special H-RNTI may be an H-RNTI configured for UE that sends a data packet in the fast transmission manner. When the UE detects the H-RNTI, the UE may determine that a MAC-d header or a MAC-c header in a data packet subsequently received through an HS-PDSCH channel includes an identifier of the UE, or a MAC-ehs header in the data packet includes an identifier of the UE.

It should be noted that, the foregoing method for sending, by the RNC, the downlink data packet to the UE, and including, in the downlink data packet, the user identifier of the UE or the user identifier of the UE and the identifier type may be independently applied to a scenario of sending, by the RNC, the downlink data packet to the UE. In addition, the method may be used in a scenario in which data transmission is performed by using the fast transmission procedure, or may be applied to a scenario in which data transmission is performed by using a common procedure or another data transmission procedure.

Further, before the RNC receives the data packet sent from the UE, the method may further include: sending, by the RNC, a system information block (SIB) message to the UE, where the SIB message carries bearer configuration information of the data transmission, so that the UE sends the data packet to the base station according to the bearer configuration information. Further, after the RNC receives the data packet sent from the user equipment (UE), the method may further include: sending, by the RNC, a synchronization message to the UE, so that the UE releases the data transmission bearer according to the synchronization message.

FIG. 3 is a flowchart of Embodiment 3 of a data transmission method according to the present invention, and an execution body in this embodiment is UE. The method in this embodiment may include:
Step 1: The user equipment (UE) sends access information to a base station to acquire a transmission resource.
Step 2: The UE sends a data packet to the base station by using the transmission resource.

The access information or the data packet includes a first fast transmission indication, so that the base station determines, according to the first fast transmission indication, that the UE performs data transmission by using a fast transmission procedure.

Because this embodiment includes two parallel methods, where method 1 is that the first fast transmission indication is carried in the access information in step 1, and method 2 is that the first fast transmission indication is carried in the data packet in step 2; for ease of description, method 1 is used as an example for description in FIG. 3. As shown in FIG. 3, the method in this embodiment may include:
Step 301: The UE sends access information to a base station to acquire a transmission resource, where the access information includes a first fast transmission indication, so that the base station determines, according to the first fast transmission indication, that the UE performs data transmission by using a fast transmission procedure.
Step 302: The UE sends a data packet to the base station by using the transmission resource. When receiving the data packet sent from the UE, the base station sends the data packet to an RNC, and includes a second fast transmission indication in the data packet, so that the RNC determines that the data packet is sent in a fast transmission manner.

It should be noted that, that the UE sends a data packet to the base station by using the transmission resource may be that the UE sends multiple data packets. However, for method 2, the first fast transmission indication is carried in the data packet in step 2. When the method is applied to a scenario of sending multiple data packets, the first fast transmission indication may be carried in a first data packet, and the first fast transmission indication may no longer be carried in a subsequent data packet.

In the prior art, a common data transmission process is that a data transmission channel is established among the UE, the base station, and the RNC by using multiple pieces of control plane signaling and multiple pieces of user plane signaling, and data is transmitted through the data transmission channel. However, in this embodiment of the present invention, the UE carries the first fast transmission indication in the transmission process, so that the base station determines that the UE transmits data in the fast transmission manner. The fast transmission manner is particularly applicable to a scenario of transmitting a small data packet.

In this embodiment, access information or a data packet sent from UE to a base station includes a first fast transmission indication, so that the base station determines, according to the fast transmission indication, that the UE performs data transmission by using a fast transmission procedure; and the data packet carries a second fast transmission indication when the base station sends the data packet to an RNC, so that the RNC determines that the data packet is sent in a fast transmission manner. In this way, a process of establishing a data transmission channel by using multiple pieces of user plane signaling can be avoided, thereby simplifying a data transmission procedure and improving data transmission efficiency.

Further, for method 1 in the foregoing embodiment, the first fast transmission indication included in the access information may include: at least one of an access signature, PRACH channelization code, and an access timeslot.

Further, for method 2 in the foregoing embodiment, the first fast transmission indication included in the data packet may include: spare bits spare bits in a Media Access Control message header (MAC-i header) 0 in the data packet, where for example, that the spare bits are non-0000 values is used to indicate that the data packet is sent in the fast transmission manner; or an enhanced data channel radio network temporary identifier (E-RNTI) in a MAC-i header 0 in the data packet, where the E-RNTI is used only when the UE uses the fast transmission procedure, where for example, for an E-RNTI that is configured on a network side and is used for small data packet transmission or is used in an MTC related service, information about this identifier may be delivered on the network side by using a system broadcast message. Alternatively, the UE may further use a manner of excluding the MAC-i header 0 to indicate that the data packet is sent in the fast transmission manner. In a conflict detection process after the UE obtains by contention an uplink data sending resource, the UE includes the MAC-i header 0 in a data packet header; therefore, it may be constrained that when the UE uses the fast transmission procedure, the UE does not need to include the MAC-i header 0 in the data packet header. Correspondingly, when detecting that the data packet does not include a special format of the MAC-i header 0, the base station determines that the UE sends the data packet in the fast transmission manner.

Further, the data packet in the foregoing embodiment may further include a user identifier of the UE, or the data packet may further include a user identifier of the UE and a type of the user identifier.

The user identifier may be a U-RNTI, or a C-RNTI, or an IMSI, or a TMSI. Alternatively, the user identifier may also use an identifier that is in another form or of another type and can enable a recipient to identify a user, for example, a newly introduced identifier used to identify the fast transmission manner. This embodiment of the present invention constitutes no limitation on a specific form of the user identifier.

In specific implementation, the user identifier, or the user identifier and the type of the user identifier may be carried in a MAC-d header, or a MAC-c header, or a MAC-i header.

For example, when an uplink data packet is sent from using an RACH, the RNC may distinguish, by using an identifier in a MAC header, UE corresponding to the data packet. Specifically, a MAC header of the data packet includes two fields, that is, a user identifier type (UE-ID type) field and a user identifier (UE-ID) field.

When the UE has the U-RNTI or the C-RNTI, the U-RNTI or the C-RNTI of the UE may be filled in the UE-ID field. When the UE uses a user identifier of another type, the user identifier type of the UE may be filled in the UE-ID type field, and the user identifier of the UE is filled in the UE-ID field. For example, a type of a user identifier is 10 (UE-ID type=10), and then the user identifier is the IMSI or the TMSI.

Further, the user identifier may also be included in the data packet sent from the UE to the RNC; for example, the user identifier is used as content of the data packet sent from the UE to the RNC.

It should be noted that, the foregoing method for sending, by the UE, the uplink data packet to the RNC, and including, in the uplink data packet, the user identifier of the UE or the user identifier of the UE and the identifier type may be independently applied to a scenario of sending, by the UE, the uplink data packet to the RNC. In addition, the method may be used in a scenario in which data transmission is performed by using the fast transmission procedure, or may be applied to a scenario in which data transmission is performed by using a common procedure or another data transmission procedure.

Further, before the UE sends the access information to the base station to acquire the transmission resource, the method may further include: receiving, by the UE, a paging message sent from an RNC, where the paging message includes a third fast transmission indication, and the third fast transmission indication is used to trigger the UE to use the fast transmission procedure to perform the data transmission.

Specifically, the third fast transmission indication may be included in a paging cause field of the paging message, or may be included in an H-RNTI corresponding to the paging message, where the H-RNTI is configured on a network side to trigger the UE to perform the fast transmission procedure, for example, the H-RNTI is included in a system broadcast message and sent to the UE. When a NodeB sends the paging message to the UE, if an HS-SCCH uses the H-RNTI for masking, the fast transmission procedure of the UE is triggered.

The foregoing paging message is merely an example, and a message that carries the third fast transmission indication may also be any downlink message that can trigger the fast transmission procedure of the UE or any downlink data packet. That the third fast transmission indication is the H-RNTI is merely an example, and the third fast transmission indication may also be another user identifier or transmission manner identifier used for identifying the transmission manner. Further, after the UE sends the data packet to the base station by using the transmission resource, the method may further include: receiving, by the UE, a downlink data packet that is sent from the RNC by using the base station, where the downlink data packet includes the user identifier of the UE.

The downlink data packet may include feedback information that is sent from the RNC to the UE and is dedicated for the uplink data packet sent from the UE, or a data packet sent from the network side to the UE. For example, the uplink data packet sent from the UE is sent in an RLC-acknowledge (RLC-AM) mode. Then, after receiving the uplink data packet, the RNC detects, at an RLC layer, whether the uplink data packet is correct, and sends feedback information of the RLC layer to the UE according to a preset rule, for example, according to a specified time period.

The user identifier included in the downlink data packet may be carried in a MAC-d header or a MAC-c header.

Specifically, the RNC may add the user identifier (UE-ID) field into a MAC-d header or a MAC-c header of the downlink data packet sent to the UE, and optionally, may add the user identifier type (UE-ID type) field. In addition, when sending the downlink data packet to the UE, the RNC may use, in a high-speed signaling control channel (High-Speed Signaling Control Channel, HS-SCCH for short), a special HS-DSCH radio network temporary identifier (special HS-DSCH Radio Network Temporary Identity, H-RNTI for short) to perform masking.

Further, when the downlink data packet is sent from using a high-speed downlink shared channel (High-Speed Downlink Shared Channel, HS-DSCH for short), the user identifier may be further carried in a MAC-ehs header. In addition, when sending the downlink data packet to the UE, the RNC may also use, in the HS-SCCH, the special H-RNTI to perform masking.

The special H-RNTI may be an H-RNTI configured for UE that sends a data packet in the fast transmission manner. When the UE detects the H-RNTI, the UE may determine that a MAC-d header or a MAC-d header in a data packet subsequently received through an HS-PDSCH channel includes an identifier of the UE, or a MAC-ehs header includes the identifier of the UE. Further, when the downlink data packet is sent from using the HS-DSCH, the user identifier may be further carried in the HS-SCCH. The user identifier may be a random number generated and reported by the UE to the network side. For example, when sending uplink data packet, the UE generates a 24-digit random number, and the random number is included in a MAC-i header and sent to the base station. When the base station receives downlink data packet sent from the RNC and dedicated for the UE, the base station may use the foregoing random number or a value derived from the foregoing random number as the identifier of the UE so as to perform masking on the HS-SCCH.

It should be noted that, the foregoing method for sending, by the RNC, the downlink data packet to the UE, and including, in the downlink data packet, the user identifier of the UE or the user identifier of the UE and the identifier type may be independently applied to a scenario of sending, by the RNC, the downlink data packet to the UE. In addition, the method may be used in a scenario in which data transmission is performed by using the fast transmission procedure, or may be applied to a scenario in which data transmission is performed by using a common procedure or another data transmission procedure.

Further, before the UE sends the data packet to the base station by using the transmission resource, the method may further include: receiving, by the UE, a system information block (SIB) message sent from the RNC, where the SIB message carries bearer configuration information of the data transmission.

Then, that the UE sends a data packet to the base station by using the transmission resource may include: sending, by the UE, the data packet to the base station according to the bearer configuration information by using the transmission resource.

Further, after the UE sends the data packet to the base station by using the transmission resource, the method may further include: receiving, by the UE, a synchronization message that is sent from the RNC by using the base station, and releasing a data transmission bearer according to the synchronization message.

The following uses a specific embodiment to describe in detail the technical solution of the data transmission method in the present invention.

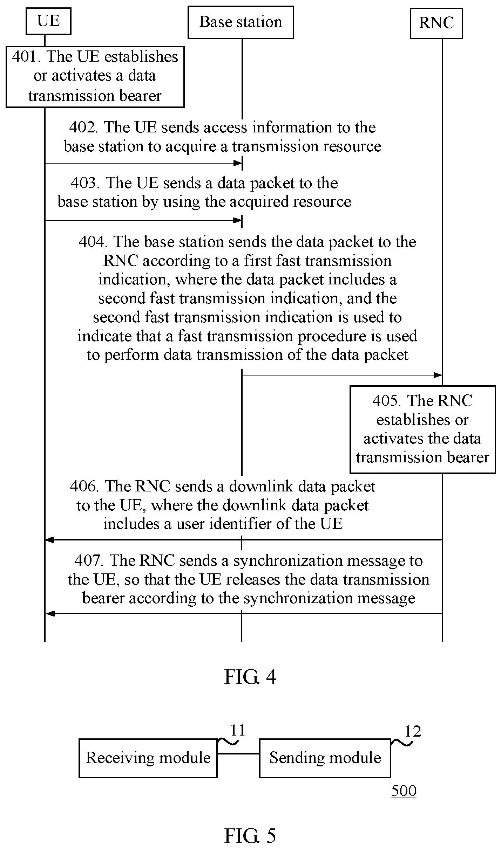

FIG. 4 is a signaling flowchart of Embodiment 4 of a data packet transmission method according to the present invention. As shown in FIG. 4, the method in this embodiment may include:
Step 401: UE establishes or activates a data transmission bearer.

Specifically, if the UE has already established a data transmission bearer before step 401, step 401 is activating the data transmission bearer. If the UE has not established a data transmission bearer before step 401, then before step 401, the UE may further read bearer configuration information, for example, signaling radio bearer (Signaling Radio Bearer, SRB for short) or traffic radio bearer (Traffic Radio Bearer, TRB for short) information, in a system information block (System Info Block, SIB for short) message, and step 401 is establishing a data transmission bearer according to the bearer configuration information.

Further, if an SIB message saved by the UE is a latest SIB message of a current cell, the UE does not need to acquire the message again; if the SIB message saved by the UE is not the latest SIB message, the UE needs to acquire the SIB message again before data transmission. For example, when a processing function of the UE on the SIB message is set to non-real-time update of the SIB message, the UE needs to acquire the SIB message again before sending uplink data. Considering a type of the UE, for example, UE of a terminal device that executes a service of a longer period such as intelligent metering, only a part of necessary SIB messages, for example, SIB1 and SIB5, may need to be acquired.

Step 402: The UE sends access information to a base station to acquire a transmission resource. The resource acquired by the UE may be a physical random access channel (Physical Random Access Channel, PRACH for short) or a common enhanced-data channel (Common Enhanced-Data Channel, Common E-DCH for short).

Step 403: The UE sends a data packet to the base station by using the acquired resource.

A first fast transmission indication needs to be carried in at least one step of the foregoing step 402 and step 403, that is, the access information or the data packet includes the first fast transmission indication, so that the base station performs data transmission according to the first fast transmission indication by using a fast transmission procedure.

In an implementation manner, the access information in step 402 includes the first fast transmission indication.

Specifically, the first fast transmission indication included in the access information may include at least one of an access signature, PRACH channelization code, and an access timeslot.

Correspondingly, when receiving the access information, the base station identifies, by using the access signature and/or the PRACH channelization code and/or the access timeslot that are/is in the access information sent from the UE, whether the UE transmits the data packet in a fast transmission manner.

This implementation manner is applicable to a scenario in which the transmission resource acquired by the UE is either the PRACH or the Common E-DCH.

In another implementation manner, the data packet in step 403 includes the first fast transmission indication.

Specifically, the first fast transmission indication included in the data packet may include: spare bits spare bits in a Media Access Control message header (MAC-i header) 0 in the data packet, where for example, that the spare bits are non-0000 values is used to indicate that the UE sends the data packet in the fast transmission manner; or an enhanced data channel radio network temporary identifier (E-RNTI) in a MAC-i header 0 in the data packet. Correspondingly, for example, when the E-RNTI is an E-RNTI dedicated for fast transmission of the data packet, it indicates that the UE sends the data packet in the fast transmission manner. The E-RNTI is used only when the UE uses the fast transmission procedure; for example, for an E-RNTI that is configured on a network side and is used for small data packet transmission or is used in an MTC related service, information about this identifier may be delivered on the network side by using a system broadcast message.

Alternatively, the UE may further use a manner of excluding the MAC-i header 0 to indicate that the data packet is sent in the fast transmission manner. In a conflict detection process after the UE obtains by contention an uplink data sending resource, the UE includes MAC-i header 0 in a data packet header to perform data transmission; therefore, it may be constrained that when the UE uses the fast transmission procedure, the UE does not need to include MAC-i header 0 in the data packet header. Correspondingly, when detecting that the data packet does not include a special format of MAC-i header 0, the base station determines that the UE sends the data packet in the fast transmission manner.

This implementation manner is applicable to a scenario in which the transmission resource acquired by the UE is the Common E-DCH.

Step 404: The base station sends the data packet to an RNC according to the first fast transmission indication, where the data packet includes a second fast transmission indication, and the second fast transmission indication is used to indicate that a fast transmission procedure is used to perform data transmission of the data packet.

After the base station identifies that the UE sends the data packet in the fast transmission manner, the base station sends the data packet to the RNC, and at the same time, the data packet carries the second fast transmission indication. Specifically, the following two implementation manners may be used:
The first implementation manner corresponds to a scenario in which the UE uses the PRACH as the transmission resource. The base station sends a random access channel (Random Access Channel, RACH for short) data frame (DATA FRAME) to the RNC, where the second fast transmission indication is a transmission manner identifier (for example, Transmission Mode Indicator) included in the RACH DATA FRAME. For example, for a 1-bit (Bit) Transmission Mode Indicator, when the indicator is 1, it indicates that the data packet is sent in the fast transmission manner.

The second implementation manner corresponds to a scenario in which the UE uses the Common E-DCH as the transmission resource. The base station sends an enhanced data channel (E-DCH) DATA FRAME to the RNC, where the second fast transmission indication is a resource identifier and/or a transmission manner identifier that are/is included in the E-DCH DATA FRAME, or an E-RNTI in the E-DCH DATA FRAME, or an E-RNTI and a data packet type flag that are in the E-DCH DATA FRAME. Specifically, the second fast transmission indication may use the following manners.
Manner 1: The base station adds indication information of a transmission manner of the data packet into the E-DCH DATA FRAME; for example, for a 1-bit Transmission Mode Indicator, when the indicator is 1, it indicates that the data packet is sent in the fast transmission manner.
Manner 2: The base station indicates a transmission manner of the data packet by using an E-RNTI field in the E-DCH DATA FRAME; for example, the E-RNTI may be an E-RNTI configured for specially identifying the transmission manner, or may be an E-RNTI corresponding to the transmission resource, for example, a corresponding E-RNTI in MAC-i header 0; or the E-RNTI may be an identifier generated by the UE, for example, a random number generated by the UE or a value derived from the random number generated by the UE.
Manner 3: The base station identifies a transmission manner of the data packet by using an E-RNTI and a data packet type that are in the E-DCH DATA FRAME; for example, the data packet received by the RNC is a dedicated transmission channel (Dedicated Transmission Channel, DTCH for short) data packet or a dedicated control channel (Dedicated Control Channel, DCCH for short) data packet, and at the same time, if an E-RNTI in the data packet is a new E-RNTI, it indicates that the data packet is sent in the fast transmission manner.
Manner 4: The base station adds a resource identifier corresponding to the data packet transmission or adds indication information of a transmission manner of the data packet and a resource identifier corresponding to the data packet transmission into the E-DCH DATA FRAME, and indicates, by using the resource identifier or by using the resource identifier and the indication information of the transmission manner of the data packet, that the data packet is sent in the fast transmission manner.

Further, for step 403 and step 404, that is, the UE sends the data packet to the base station, and the base station sends the data packet to the RNC, in a process of sending an uplink data packet, the data packet may further include a user identifier of the UE, or the data packet further includes a user identifier of the UE and a type of the user identifier.

The user identifier may be a U-RNTI, or a C-RNTI, or an IMSI, or a TMSI. Alternatively, the user identifier may also use an identifier that is in another form or of another type that can enable a recipient to identify a user, for example, a newly introduced identifier used to identify fast transmission. This embodiment of the present invention constitutes no limitation on a specific form of the user identifier.

Further, the user identifier, or the user identifier and the type of the user identifier may be carried in a MAC-d header, or a MAC-c header, or a MAC-i header.

For example, when an uplink data packet is sent from using an RACH, the RNC may distinguish, by using an identifier in a MAC header, UE corresponding to the data packet. Specifically, a MAC header of the data packet includes two fields, that is, a user identifier type (UE-ID type) field and a user identifier (UE-ID) field.

When the UE has the U-RNTI or the C-RNTI, the U-RNTI or the C-RNTI of the UE may be filled in the UE-ID field. When the UE uses a user identifier of another type, the user identifier type of the UE may be filled in the UE-ID type field, and the user identifier of the UE may be filled in the UE-ID field. For example, a type of a user identifier is 10 (UE-ID type=10), and then the user identifier in the UE-ID field is the IMSI or the TMSI.

Further, the user identifier may also be included in the data packet sent from the UE to the RNC; for example, the user identifier is used as content of the data packet sent from the UE to the RNC.

It should be noted that, the foregoing method for sending, by the UE, the uplink data packet to the RNC, and including, in the uplink data packet, the user identifier of the UE or the user identifier of the UE and the identifier type may be independently applied to a scenario of sending, by the UE, the uplink data packet to the RNC. In addition, the method may be used in a scenario in which data transmission is performed by using the fast transmission procedure, or may be applied to a scenario in which data transmission is performed by using a common procedure or another data transmission procedure.

Step 405: The RNC establishes or activates the data transmission bearer.

If the RNC has not established a data transmission bearer dedicated for the UE before step 405, the step 405 is establishing the data transmission bearer, for example, establishing a radio link control (Radio Link Control, RLC for short) entity; if the RNC has established a data transmission bearer dedicated for the UE before step 405 but has not activated the data transmission bearer, step 405 is activating the data transmission bearer.

Step 406: The RNC sends a downlink data packet to the UE, where the downlink data packet includes the user identifier of the UE.

The downlink data packet may include feedback information that is sent from the RNC to the UE and is dedicated for the uplink data packet sent from the UE, or a data packet sent from a network side to the UE. For example, the uplink data packet sent from the UE is sent in an RLC-acknowledge (RLC-AM) mode. Then, after receiving the uplink data packet, the RNC detects, at an RLC layer, whether the uplink data packet is correct, and sends feedback information of the RLC layer to the UE according to a preset rule, for example, according to a specified time period.

Further, specifically, the user identifier included in the downlink data packet may be carried in a MAC-d header or a MAC-c header.

Specifically, the RNC may add the user identifier (UE-ID) field into a MAC-d header or a MAC-c header of the downlink data packet sent to the UE, and optionally, may add the user identifier type (UE-ID type) field. In addition, when sending the downlink data packet to the UE, the RNC may use, in a high-speed signaling control channel (High-Speed Signaling Control Channel, HS-SCCH for short), a special HS-DSCH radio network temporary identifier (Special HS-DSCH Radio Network Temporary Identity, H-RNTI for short) to perform masking.

Further, when the downlink data packet is sent from using a high-speed downlink shared channel (High-Speed Downlink Shared Channel, HS-DSCH for short), the user identifier may be further carried in a MAC-ehs header. In addition, when sending the downlink data packet to the UE, the RNC may also use, in the HS-SCCH, the special H-RNTI to perform masking.

The special H-RNTI may be an H-RNTI configured for UE that sends a data packet in the fast transmission manner. When the UE detects the H-RNTI, the UE may determine that a MAC-d header or a MAC-d header in a data packet subsequently received through an HS-PDSCH channel includes an identifier of the UE, or a MAC-ehs header includes the identifier of the UE.

Further, when the downlink data packet is sent from using the HS-DSCH, the user identifier may be further carried in the HS-SCCH. The user identifier may be a random number generated and reported by the UE to the network side. For example, when sending uplink data packet, the UE generates a 24-digit random number, and the random number is included in a MAC-i header and sent to the base station. When the base station receives downlink data packet sent from the RNC and dedicated for the UE, the base station may use the foregoing random number or a value derived from the foregoing random number as the identifier of the UE so as to perform masking on the HS-SCCH.

It should be noted that, the foregoing method for sending, by the RNC, the downlink data packet to the UE, and including, in the downlink data packet, the user identifier of the UE or the user identifier of the UE and the identifier type may be independently applied to a scenario of sending, by the RNC, the downlink data packet to the UE. In addition, the method may be used in a scenario in which data transmission is performed by using the fast transmission procedure, or may be applied to a scenario in which data transmission is performed by using a common procedure or another data transmission procedure.

Step 407: The RNC sends a synchronization message to the UE, so that the UE releases the data transmission bearer according to the synchronization message.

When determining that uplink/downlink data transmission of the UE ends, the RNC may send the synchronization message to the UE, so that the UE releases the transmission resource.

In this embodiment, UE sends access information or a data packet to a base station, where the access information or the data packet carries a first fast transmission indication, so that the base station identifies that the UE sends the data packet in a fast transmission manner; and the data packet carries a second fast transmission indication when the base station sends the data packet to an RNC, so that the RNC determines that the data packet is sent in the fast transmission manner, thereby receiving the data packet according to a fast transmission procedure. In this way, a process of establishing a data transmission channel by using multiple pieces of user plane signaling can be avoided, thereby greatly simplifying a data transmission procedure and improving data transmission efficiency.

It should be noted that, the method in the foregoing embodiment may be used to transmit multiple data packets. The foregoing first fast transmission indication and second fast transmission indication may be carried when a first data packet is transmitted. After the UE, the base station, and the RNC all confirm that the fast transmission manner is used, the first fast transmission indication and the second fast transmission indication may no longer be carried in a subsequent data packet transmission process.

Further, in an embodiment, before step 402 in the foregoing embodiment, the method may further include: sending, by the RNC, a paging message to the UE, where the paging message includes a third fast transmission indication, and the third fast transmission indication is used to trigger the UE to use the fast transmission procedure to perform the data transmission.

This implementation manner is sending, of an uplink data packet, triggered by a downlink data packet. That is, after receiving downlink data sent from the network side, the UE further performs data transmission in the fast transmission manner, where the downlink data packet herein mainly refers to the paging message. This implementation manner is mainly applicable to a scenario in which the network side has a downlink data packet that needs to be sent to the UE. Further, specifically, the third fast transmission indication may be included in a paging cause (paging cause) field of the paging message or included in an H-RNTI corresponding to the paging message, where the H-RNTI is configured on the network side to trigger the UE to perform the fast transmission procedure; for example, the H-RNTI is included in a system broadcast message and sent to the UE. When a NodeB sends the paging message to the UE, if an HS-SCCH uses the H-RNTI for masking, the fast transmission procedure of the UE is triggered. A manner in which the third fast transmission indication is included in the H-RNTI corresponding to the paging message is mainly dedicated for UE that supports an enhanced cell forward access channel (CELL Forward Access Channel, CELL_FACH for short) feature. The RNC may indicate, by using paging (paging) H-RNTI masking in the HS-SCCH, that the UE sends data in the fast transmission manner. The paging H-RNTI herein is an H-RNTI used for paging. In specific implementation, bearer configuration information may be carried in the paging message, so that the UE establishes the data transmission bearer according to the bearer configuration information. Therefore, after receiving HS-SCCH masked by using the H-RNTI, the UE triggers execution of a transmission process following step 401 and step 402 in the foregoing embodiment.

The foregoing paging message is merely an example, and a message that carries the third fast transmission indication may also be any downlink message that can trigger the fast transmission procedure of the UE or any downlink data packet. That the third fast transmission indication is the H-RNTI is merely an example, and the third fast transmission indication may also be another user identifier or transmission manner identifier used for identifying the transmission manner.

In Embodiment 5 of a data transmission method according to the present invention, UE sends a data packet to a network side, where the data packet includes a fourth fast transmission indication.

The fourth fast transmission indication may be included in the data packet. Specifically, the fourth fast transmission indication may be included in signaling that carries the data packet, for example, included in an RRC connection establishing request message or included in a cell update message.

Alternatively, the fourth fast transmission indication may be included in a header of the data packet, for example, may be included in a MAC-is header, a MAC-d header, or MAC-c header. Correspondingly, when receiving the data packet, an RNC identifies whether the data packet includes the fourth fast transmission indication; and if the data packet includes the fourth fast transmission indication, determines that the data packet is sent in a fast transmission manner.

A technical effect of this embodiment is that, a data packet sent from UE to a network side carries a fourth fast transmission indication, so that an RNC identifies that the data packet is sent in a fast transmission manner. In this way, a process of establishing a data transmission channel by using multiple pieces of user plane signaling can be avoided, thereby simplifying a data transmission procedure and improving data transmission efficiency.

It should be noted that, in the foregoing embodiments, both the E-RNTI and the H-RNTI may be identifiers generated by the UE; for example, a random number generated by the UE or a value derived from a random number generated by the UE.

FIG. 5 is a schematic structural diagram of Embodiment 1 of a data transmission apparatus according to the present invention, where a data transmission apparatus 500 in this embodiment may be disposed on a base station, or may be the base station itself. As shown in FIG. 5, the data transmission apparatus in this embodiment may include a receiving module 11 and a sending module 12. The receiving module 11 may be configured to receive a data packet sent from user equipment (UE). The sending module 12 may be configured to send the data packet to a radio network controller (RNC), where the data packet includes a second fast transmission indication, and the second fast transmission indication is used to indicate that a fast transmission procedure is used to perform data transmission of the data packet.

The data transmission apparatus in this embodiment may be used to execute the technical solution in the method embodiment shown in FIG. 1, and an implementation principle of the technical solution executed by a corresponding base station in the method embodiment shown in FIG. 4 is similar and is not described herein again.

A technical effect of the data transmission apparatus in this embodiment is that, a base station receives a data packet that is sent from UE and includes a first fast transmission indication, and sends the data packet to an RNC according to the first fast transmission indication in a fast transmission manner; at the same time, the data packet carries a second fast transmission indication, so that the RNC determines that the data packet is sent in the fast transmission manner. In this way, a process of establishing a data transmission channel by using multiple pieces of user plane signaling can be avoided, thereby simplifying a data transmission procedure and improving data transmission efficiency.

In the foregoing embodiment, further, the receiving module 11 may be further configured to: before receiving the data packet sent from the UE, receive access information sent from the UE, where the access information includes a first fast transmission indication, and the first fast transmission indication is used to indicate that the UE performs data transmission by using the fast transmission procedure.

Further, specifically, the first fast transmission indication includes at least one of an access signature, PRACH channelization code, and an access timeslot.

Further, the receiving module 11 may be specifically configured to: receive a data packet that is sent from the UE and includes the first fast transmission indication, where the first fast transmission indication is used to indicate that the UE performs data transmission by using the fast transmission procedure.

Further, specifically, the first fast transmission indication may be spare bits spare bits in a Media Access Control message header (MAC-i header) 0 in the data packet or an enhanced data channel radio network temporary identifier (E-RNTI) in a MAC-i header 0 in the data packet. Alternatively, the first fast transmission indication may be further indicated in a manner in which the data packet does not include MAC-i header 0.

Further, the sending module 12 may be specifically configured to: send a random access channel (RACH) data frame to the RNC, where the second fast transmission indication is a transmission manner identifier included in the RACH DATA FRAME; or send an enhanced data channel (E-DCH) DATA FRAME to the RNC, where the second fast transmission indication is a resource identifier and/or a transmission manner identifier that are/is included in the E-DCH DATA FRAME, or an E-RNTI in the E-DCH DATA FRAME, or an E-RNTI and a data packet type flag that are in the E-DCH DATA FRAME.

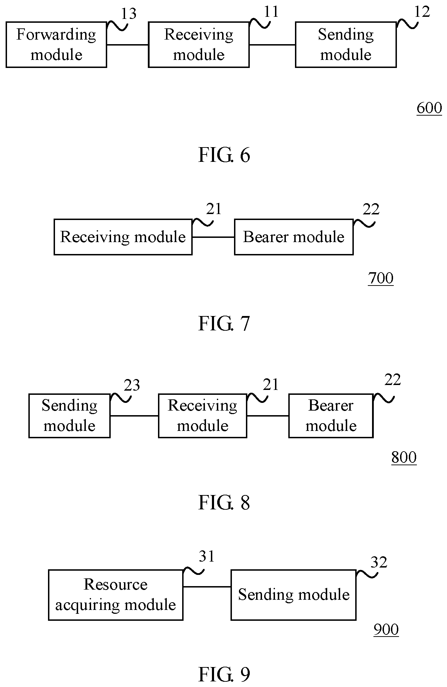

FIG. 6 is a schematic structural diagram of Embodiment 2 of a data transmission apparatus according to the present invention, where a data transmission apparatus 600 in this embodiment may be disposed on a base station, or may be the base station itself. As shown in FIG. 6, based on the apparatus shown in FIG. 5, the data transmission apparatus in this embodiment may further include a forwarding module 13. The forwarding module 13 may be configured to, before the data packet sent from the UE is received, forward a paging message from the RNC to the UE, where the paging message includes a third fast transmission indication, and the third fast transmission indication is used to trigger the UE to use the fast transmission procedure to perform the data transmission.

Further, specifically, the third fast transmission indication may be included in a paging cause field of the paging message or included in an H-RNTI corresponding to the paging message.

The data transmission apparatus in this embodiment may be used to execute the technical solution in the method embodiment shown in FIG. 1, and an implementation principle and a technical effect of the technical solution executed by a corresponding base station in the method embodiment shown in FIG. 4 are similar and are not described herein again.

FIG. 7 is a schematic structural diagram of Embodiment 3 of a data transmission apparatus according to the present invention, where a data transmission apparatus 700 in this embodiment may be disposed on an RNC, or may be the RNC itself. As shown in FIG. 7, the data transmission apparatus in this embodiment may include a receiving module 21 and a bearer module 22. The receiving module 21 may be configured to receive, by using a base station, a data packet sent from user equipment (UE), where the data packet includes a second fast transmission indication, and the second fast transmission indication is used to indicate that a fast transmission procedure is used to perform data transmission of the data packet. The bearer module 22 may be configured to establish or activate a data transmission bearer.

Further, the receiving module 21 may be specifically configured to: receive a random access channel (RACH) data frame sent from the base station, where the second fast transmission indication is a transmission manner identifier included in the RACH DATA FRAME; or receive an enhanced data channel (E-DCH) DATA FRAME sent from the base station, where the second fast transmission indication is a resource identifier and/or a transmission manner identifier that are/is included in the E-DCH DATA FRAME, or an E-RNTI included in the E-DCH DATA FRAME, or an E-RNTI and a data packet type identifier that are included in the E-DCH DATA FRAME.

Further, the data packet may further include a user identifier of the UE, or the data packet may further include a user identifier of the UE and a type of the user identifier.

Specifically, the user identifier may be a U-RNTI, or a C-RNTI, or an IMSI, or a TMSI.

Further, specifically, the user identifier may be carried in a MAC-d header, or a MAC-c header, or a MAC-i header.

The data transmission apparatus in this embodiment may be used to execute the technical solution in the method embodiment shown in FIG. 2, and an implementation principle of the technical solution executed by a corresponding RNC in the method embodiment shown in FIG. 4 is similar and is not described herein again.

A technical effect of the data transmission apparatus in this embodiment is that, an RNC receives a data packet that is sent from a base station and carries a second fast transmission indication, and identifies that the data packet is sent in a fast transmission manner, so as to receive the data packet according to a fast transmission procedure. In this way, a process of establishing a data transmission channel by using multiple pieces of user plane signaling can be avoided, thereby simplifying a data transmission procedure and improving data transmission efficiency.

FIG. 8 is a schematic structural diagram of Embodiment 4 of a data transmission apparatus according to the present invention, where a data transmission apparatus 800 in this embodiment may be disposed on an RNC, or may be the RNC itself. As shown in FIG. 8, based on the apparatus shown in FIG. 7, the data transmission apparatus in this embodiment may further include a sending module 23. The sending module 23 may be configured to, before the data packet sent from the UE is received, send a paging message to the UE, where the paging message includes a third fast transmission indication, and the third fast transmission indication is used to trigger the UE to use the fast transmission procedure to perform the data transmission.

Further, the fast transmission indication may be included in a paging cause field of the paging message, or may be included in an H-RNTI corresponding to the paging message.

Further, the sending module 23 may be further configured to: after the data packet sent from the UE is received, send a downlink data packet to the UE, where the downlink data packet includes the user identifier of the UE.

Further, specifically, the user identifier included in the downlink data packet may be carried in a MAC-d header or a MAC-c header.

Further, the sending module 23 may be specifically configured to:send the downlink data packet to the UE by using an HS-DSCH, where the user identifier is carried in the MAC-d header or the MAC-c header, or carried in a MAC-ehs header.

Further, the sending module 23 may be further configured to: before the data packet sent from the UE is received, send a system information block (SIB) message to the UE, where the SIB message carries bearer configuration information of the data transmission, so that the UE sends the data packet to the base station according to the bearer configuration information.

Further, the sending module 23 may be further configured to: after the data packet sent from the user equipment (UE) is received, send a synchronization message to the UE, so that the UE releases the data transmission bearer according to the synchronization message.

The data transmission apparatus in this embodiment may be used to execute the technical solution in the method embodiment shown in FIG. 2 and an implementation principle and a technical effect of the technical solution executed by a corresponding RNC in the method embodiment shown in FIG. 4 are similar and are not described herein again.

FIG. 9 is a schematic structural diagram of Embodiment 5 of a data transmission apparatus according to the present invention, where a data transmission apparatus 900 in this embodiment may be disposed on UE, or may be the UE itself. As shown in FIG. 9, the data transmission apparatus in this embodiment may include a resource acquiring module 31 and a sending module 32. The resource acquiring module 31 may be configured to send access information to a base station to acquire a transmission resource. The sending module 32 may be configured to send a data packet to the base station by using the transmission resource, where the access information or the data packet includes a first fast transmission indication, so that the base station determines, according to the first fast transmission indication, that the UE performs data transmission by using a fast transmission procedure.

Further, specifically, the first fast transmission indication included in the access information may include: at least one of an access signature, PRACH channelization code, and an access timeslot.

Alternatively, the first fast transmission indication included in the data packet may include: spare bits spare bits in a Media Access Control message header (MAC-i header) 0 in the data packet or an enhanced data channel radio network temporary identifier (E-RNTI) in a MAC-i header 0 in the data packet.

Further, the data packet may further include a user identifier of the UE, or the data packet may further include a user identifier of the UE and a type of the user identifier.

The user identifier may be a U-RNTI, or a C-RNTI, or an IMSI, or a TMSI.

Specifically, the user identifier may be carried in a MAC-d header, or a MAC-c header, or a MAC-i header.

In this embodiment, access information or a data packet sent from UE to a base station includes a first fast transmission indication, so that the base station determines, according to the fast transmission indication, that the UE performs data transmission by using a fast transmission procedure, so that the base station also sends the data packet to an RNC in a fast transmission manner. In this way, a process of establishing a data transmission channel by using multiple pieces of user plane signaling can be avoided, thereby simplifying a data transmission procedure and improving data transmission efficiency.

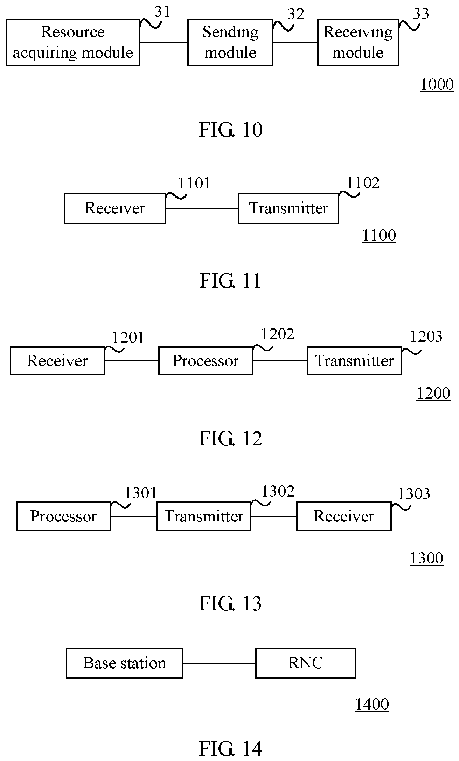

FIG. 10 is a schematic structural diagram of Embodiment 6 of a data transmission apparatus according to the present invention, where a data transmission apparatus 1000 in this embodiment may be disposed on UE, or may be the UE itself. As shown in FIG. 10, based on the apparatus shown in FIG. 9, the data transmission apparatus in this embodiment may further include a receiving module 33. The receiving module 33 may be configured to, before the access information is sent to the base station to acquire the transmission resource, receive a paging message sent from an RNC, where the paging message includes a third fast transmission indication, and the third fast transmission indication is used to trigger the UE to use the fast transmission procedure to perform the data transmission.

Further, specifically, the third fast transmission indication may be included in a paging cause field of the paging message, or may be included in an H-RNTI corresponding to the paging message.

Further, the receiving module 33 may be further configured to: after the data packet is sent to the base station by using the transmission resource, receive a downlink data packet that is sent from the RNC by using the base station, where the downlink data packet includes the user identifier of the UE.

Further, specifically, the user identifier included in the downlink data packet may be carried in a MAC-d header or a MAC-c header.

Further, the receiving module 33 may be specifically configured to: receive, by using an HS-DSCH, the downlink data packet sent from the RNC to the UE, where the user identifier is carried in the MAC-d header or the MAC-c header, or carried in a MAC-ehs header.

Further, the receiving module 33 may be further configured to: before the data packet is sent to the base station by using the transmission resource, receive a system information block (SIB) message sent from the RNC, where the SIB message carries bearer configuration information of the data transmission.

The sending module 32 may be specifically configured to: send the data packet to the base station according to the bearer configuration information by using the transmission resource.

Further, the receiving module 33 may be further configured to: after the data packet is sent to the base station by using the transmission resource, receive a synchronization message that is sent from the RNC by using the base station, and release a data transmission bearer according to the synchronization message.

The data transmission apparatus in this embodiment may be used to execute the technical solution in the method embodiment shown in FIG. 3 and an implementation principle and a technical effect of the technical solution executed by a corresponding UE in the method embodiment shown in FIG. 4 are similar and are not described herein again.

FIG. 11 is a schematic structural diagram of Embodiment 1 of a base station according to the present invention. As shown in FIG. 11, a base station 1100 in this embodiment may include a receiver 1101 and a transmitter 1102. The receiver 1101 may be configured to receive a data packet sent from user equipment (UE). The transmitter 1102 may be configured to send the data packet to an RNC, where the data packet includes a second fast transmission indication, and the second fast transmission indication is used to indicate that a fast transmission procedure is used to perform data transmission of the data packet.

Further, the receiver 1101 may be further configured to: before receiving the data packet sent from the UE, receive access information sent from the UE, where the access information includes a first fast transmission indication, and the first fast transmission indication is used to indicate that the UE performs data transmission by using the fast transmission procedure. Further, specifically, the first fast transmission indication includes at least one of an access signature, PRACH channelization code, and an access timeslot.

Further, the receiver 1101 may be specifically configured to: receive a data packet that is sent from the UE and includes the first fast transmission indication, where the first fast transmission indication is used to indicate that the UE performs data transmission by using the fast transmission procedure.

Further, specifically, the first fast transmission indication may be spare bits spare bits in a Media Access Control message header (MAC-i header) 0 in the data packet or an enhanced data channel radio network temporary identifier (E-RNTI) in a MAC-i header 0 in the data packet. Alternatively, the first fast transmission indication may be further indicated in a manner in which the data packet does not include MAC-i header 0.

Further, the transmitter 1102 may be specifically configured to: send a random access channel (RACH) data frame to the RNC, where the second fast transmission indication is a transmission manner identifier included in the RACH DATA FRAME; or send an enhanced data channel (E-DCH) DATA FRAME to the RNC, where the second fast transmission indication is a resource identifier and/or a transmission manner identifier that are/is included in the E-DCH DATA FRAME, or an E-RNTI in the E-DCH DATA FRAME, or an E-RNTI and a data packet type flag that are in the E-DCH DATA FRAME.

Further, the transmitter 1102 may be further configured to, before the data packet sent from the UE is received, forward a paging message from the RNC to the UE, where the paging message includes a third fast transmission indication, and the third fast transmission indication is used to trigger the UE to use the fast transmission procedure to perform the data transmission.

Further, specifically, the third fast transmission indication may be included in a paging cause field of the paging message or included in an H-RNTI corresponding to the paging message.

The base station in this embodiment may be used to execute the technical solution in the method embodiment shown in FIG. 1 and an implementation principle of the technical solution executed by a corresponding base station in the method embodiment shown in FIG. 4 is similar and is not described herein again.

A technical effect of the base station in this embodiment is that, the base station receives a data packet that is sent from UE and includes a first fast transmission indication, and sends the data packet to an RNC according to the first fast transmission indication in a fast transmission manner; at the same time, the data packet carries a second fast transmission indication, so that the RNC determines that the data packet is sent in the fast transmission manner. In this way, a process of establishing a data transmission channel by using multiple pieces of user plane signaling can be avoided, thereby simplifying a data transmission procedure and improving data transmission efficiency.

FIG. 12 is a schematic structural diagram of Embodiment 1 of an RNC according to the present invention. As shown in FIG. 12, an RNC 1200 in this embodiment may include a receiver 1201 and a processor 1202. The receiver 1201 may be configured to receive, by using a base station, a data packet sent from user equipment (UE), where the data packet includes a second fast transmission indication, and the second fast transmission indication is used to indicate that a fast transmission procedure is used to perform data transmission of the data packet. The processor 1202 may be configured to establish or activate a data transmission bearer.

Further, the receiver 1201 may be specifically configured to: receive a random access channel (RACH) data frame sent from the base station, where the second fast transmission indication is a transmission manner identifier included in the RACH DATA FRAME; or receive an enhanced data channel (E-DCH) DATA FRAME sent from the base station, where the second fast transmission indication is a resource identifier and/or a transmission manner identifier that are/is included in the E-DCH DATA FRAME, or an E-RNTI included in the E-DCH DATA FRAME, or an E-RNTI and a data packet type identifier that are included in the E-DCH DATA FRAME. Further, the data packet may further include a user identifier of the UE, or the data packet may further include a user identifier of the UE and a type of the user identifier.

Specifically, the user identifier may be a U-RNTI, or a C-RNTI, or an IMSI, or a TMSI.

Further, specifically, the user identifier may be carried in a MAC-d header, or a MAC-c header, or a MAC-i header.

Further, the RNC in this embodiment may further include a transmitter 1203. The transmitter 1203 may be configured to, before the data packet sent from the UE is received, forward a paging message to the UE, where the paging message includes a third fast transmission indication, and the third fast transmission indication is used to trigger the UE to use the fast transmission procedure to perform the data transmission.

Further, the fast transmission indication may be included in a paging cause field of the paging message, or may be included in an H-RNTI corresponding to the paging message.

Further, the transmitter 1203 may be further configured to: after the data packet sent from the UE is received, send a downlink data packet to the UE, where the downlink data packet includes the user identifier of the UE.

Further, specifically, the user identifier included in the downlink data packet may be carried in a MAC-d header or a MAC-c header.

Further, the transmitter 1203 may be specifically configured to: send the downlink data packet to the UE by using an HS-DSCH, where the user identifier is carried in the MAC-d header or the MAC-c header, or carried in a MAC-ehs header.

Further, the transmitter 1203 may be further configured to: before the data packet sent from the UE is received, send a system information block (SIB) message to the UE, where the SIB message carries bearer configuration information of the data transmission, so that the UE sends the data packet to the base station according to the bearer configuration information.

Further, the transmitter 1203 may be further configured to: after the data packet sent from the user equipment (UE) is received, send a synchronization message to the UE, so that the UE releases the data transmission bearer according to the synchronization message.

The RNC in this embodiment may be used to execute the technical solution in the method embodiment shown in FIG. 2, and an implementation principle of the technical solution executed by a corresponding RNC in the method embodiment shown in FIG. 4 is similar and is not described herein again.

A technical effect of the RNC in this embodiment is that, the RNC receives a data packet that is sent from a base station and carries a second fast transmission indication, and identifies that the data packet is sent in a fast transmission manner, so as to receive the data packet according to a fast transmission procedure. In this way, a process of establishing a data transmission channel by using multiple pieces of user plane signaling can be avoided, thereby simplifying a data transmission procedure and improving data transmission efficiency.

FIG. 13 is a schematic structural diagram of Embodiment 1 of UE according to the present invention. As shown in FIG. 13, UE 1300 in this embodiment may include a processor 1301 and a transmitter 1302. The processor 1301 may be configured to send access information to a base station to acquire a transmission resource. The transmitter 1302 may be configured to send a data packet to the base station by using the transmission resource, where the access information or the data packet includes a first fast transmission indication, so that the base station determines, according to the first fast transmission indication, that the UE performs data transmission by using a fast transmission procedure.

Further, specifically, the first fast transmission indication included in the access information may include: at least one of an access signature, PRACH channelization code, and an access timeslot. Alternatively, the first fast transmission indication included in the data packet may include: spare bits spare bits in a Media Access Control message header (MAC-i header) 0 in the data packet or an enhanced data channel radio network temporary identifier (E-RNTI) in a MAC-i header 0 in the data packet.

Further, the data packet may further include a user identifier of the UE, or the data packet may further include a user identifier of the UE and a type of the user identifier.

The user identifier may be a U-RNTI, or a C-RNTI, or an IMSI, or a TMSI.

Specifically, the user identifier may be carried in a MAC-d header, or a MAC-c header, or a MAC-i header.

Further, the UE in this embodiment may further include a receiver 1303. The receiver 1303 may be configured to, before the access information is sent to the base station to acquire the transmission resource, receive a paging message sent from an RNC, where the paging message includes a third fast transmission indication, and the third fast transmission indication is used to trigger the UE to use the fast transmission procedure to perform the data transmission.

Further, specifically, the third fast transmission indication may be included in a paging cause field of the paging message, or may be included in an H-RNTI corresponding to the paging message.

Further, the receiver 1303 may be further configured to: after the data packet is sent to the base station by using the transmission resource, receive a downlink data packet that is sent from the RNC by using the base station, where the downlink data packet includes the user identifier of the UE.

Further, specifically, the user identifier included in the downlink data packet may be carried in a MAC-d header or a MAC-c header.

Further, the receiver 1303 may be specifically configured to: receive, by using an HS-DSCH, the downlink data packet sent from the RNC to the UE, where the user identifier is carried in the MAC-d header or the MAC-c header, or carried in a MAC-ehs header.

Further, the receiver 1303 may be further configured to: before the data packet is sent to the base station by using the transmission resource, receive a system information block (SIB) message sent from the RNC, where the SIB message carries bearer configuration information of the data transmission; where the transmitter 1302 may be specifically configured to: send the data packet to the base station according to the bearer configuration information by using the transmission resource.

Further, the receiver 1303 may be further configured to: after the data packet is sent to the base station by using the transmission resource, receive a synchronization message that is sent from the RNC by using the base station, and release a data transmission bearer according to the synchronization message.

The UE in this embodiment may be used to execute the technical solution in the method embodiment shown in FIG. 3, and an implementation principle of the technical solution executed by a corresponding UE in the method embodiment shown in FIG. 4 is similar and is not described herein again.

A technical solution of the UE in this embodiment is that, access information or the data packet sent from the UE to a base station includes a first fast transmission indication, so that the base station determines, according to the fast transmission indication, that the UE performs data transmission by using a fast transmission procedure, so that the base station also sends the data packet to an RNC in a fast transmission manner. In this way, a process of establishing a data transmission channel by using multiple pieces of user plane signaling can be avoided, thereby simplifying a data transmission procedure and improving data transmission efficiency.

FIG. 14 is a schematic structural diagram of an embodiment of a communications system according to the present invention. As shown in FIG. 14, a communications system 1400 in this embodiment may include the base station according to any embodiment of the present invention and the RNC according to any embodiment of the present invention.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A base station, comprising:
a receiver (1101), configured to receive a data packet sent from a terminal device; and
a transmitter (1102), configured to send the data packet to a radio network controller, RNC, wherein the data packet comprises a second fast transmission indication, and the second fast transmission indication is used to indicate that a fast transmission procedure is used to perform data transmission of the data packet,
wherein the transmitter (1102) is further configured to:
send a random access channel, RACH, data frame to the RNC, wherein the second fast transmission indication is a transmission manner identifier comprised in the RACH DATA FRAME; or
send an enhanced data channel, E-DCH, DATA FRAME to the RNC, wherein the second fast transmission indication is a resource identifier and/or a transmission manner identifier that are/is comprised in the E-DCH DATA FRAME, or an E-RNTI in the E-DCH DATA FRAME, or an E-RNTI and a data packet type flag that are in the E-DCH DATA FRAME;
wherein the receiver (1101) is further configured to:
before receiving the data packet sent from the terminal device, receive access information sent from the terminal device, wherein the access information comprises a first fast transmission indication, and the first fast transmission indication is used to indicate that the terminal device performs data transmission by using the fast transmission procedure or
receive a data packet that is sent from the terminal device and that comprises a first fast transmission indication, wherein the first fast transmission indication is used to indicate that the terminal device performs data transmission by using the fast transmission procedure,
wherein the first fast transmission indication comprises at least one of an access signature, a physical random access channel, PRACH, channelization code, and an access timeslot or wherein the first fast transmission indication is spare bits spare bits in a Media Access Control message header, MAC-i header, 0 in the data packet or is an enhanced data channel radio network temporary identifier, E-RNTI, in a MAC-i header 0 in the data packet,
**characterized in that** the transmitter (1102) is further configured to:
before the receiving, by the base station the data packet sent from UE, forward a paging message from the RNC to the UE, wherein the paging message comprises a third fast transmission indication, and the third fast transmission indication is used to trigger the UE to use the fast transmission procedure to perform the data transmission, wherein the third fast transmission indication is comprised in a paging cause field of the paging message or comprised in a high-speed downlink shared channel radio network temporary identifier, H-RNTI, corresponding to the paging message.

2. A radio network controller, RNC, comprising:
a receiver (1201), configured to receive, by using a base station, a data packet sent from a terminal device, wherein the data packet comprises a fast transmission indication, and the fast transmission indication is used to indicate that a fast transmission procedure is used to perform data transmission of the data packet;
wherein the receiver (1201) is specifically configured to:
receive a random access channel, RACH, data frame sent from the base station, wherein the fast transmission indication is a transmission manner identifier comprised in the RACH DATA FRAME; or
receive an enhanced data channel, E-DCH, DATA FRAME sent from the base station, wherein the fast transmission indication is a resource identifier and/or a transmission manner identifier that are/is comprised in the E-DCH DATA FRAME, or an E-DCH radio network temporary identifier, E-RNTI, comprised in the E-DCH DATA FRAME, or an E-RNTI and a data packet type identifier that are comprised in the E-DCH DATA FRAME; and
a processor (1202), configured to establish or activate a data transmission bearer; and
a transmitter (1203), **characterized in that** the transmitter (1203) is specifically configured to:
before the data packet sent from the UE is received, send a paging message to the UE, wherein the paging message comprises a third fast transmission indication, and the third fast transmission indication is used to trigger the UE to use the fast transmission procedure to perform data transmission, wherein the fast transmission indication is comprised in a paging cause field of the paging message or comprised in an high-speed downlink shared channel radio network temporary identifier, H-RNTI, corresponding to the paging message.

3. The RNC according to claim 2, wherein the transmitter (1203) is further configured to:
before the data packet sent from the terminal device is received, send a system information block, SIB, message to the terminal device, wherein the SIB message carries bearer configuration information of the data transmission, so that the terminal device sends the data packet to the base station according to the bearer configuration information.

4. The RNC according to any one of claims 2 to 3, wherein the transmitter (1203) is further configured to:
after the data packet sent from the terminal device is received, send a synchronization message to the terminal device, so that the terminal device releases the data transmission bearer according to the synchronization message.

## Patentansprüche

1. Basisstation, umfassend:
einen Empfänger (1101), der konfiguriert ist, um ein von einem Endgerät gesendetes Datenpaket zu empfangen; und
einen Sender (1102), der konfiguriert ist, um das Datenpaket an eine Funknetzwerksteuerung (Radio Network Controller, RNC) zu senden, wobei das Datenpaket eine zweite Schnellübertragungsanzeige umfasst, und die zweite Schnellübertragungsanzeige verwendet wird, um anzuzeigen, dass ein schnelles Übertragungsverfahren verwendet wird, um die Datenübertragung des Datenpakets durchzuführen,
wobei der Sender (1102) ferner konfiguriert ist, um:
einen Datenrahmen eines Direktzugriffskanals (Random Access Channel, RACH) an die RNC zu senden, wobei die zweite Schnellübertragungsanzeige eine Übertragungsartkennung ist, die in dem RACH-Datenrahmen enthalten ist; oder
einen Datenrahmen eines erweiterten Datenkanals (Enhanced Data Channel, E-DCH) an die RNC zu senden, wobei die zweite Schnellübertragungsanzeige eine Ressourcenkennung und/oder eine Übertragungsartkennung, die in dem E-DCH-Datenrahmen enthalten ist/sind, oder eine temporäre Kennung des erweiterten Datenkanal-Funknetzwerks (Enhanced Data Channel Radio Network Temporary Identifier, E-RNTI) in dem E-DCH-Datenrahmen oder eine E-RNTI und ein Datenpakettyp-Kennzeichen, die sich in dem E-DCH-Datenrahmen befinden, darstellt;
wobei der Empfänger (1101) ferner konfiguriert ist, um:
vor dem Empfangen des von dem Endgerät gesendeten Datenpakets die von dem Endgerät gesendete Zugriffsinformation zu empfangen, wobei die Zugriffsinformation eine erste Schnellübertragungsanzeige umfasst, und die erste Schnellübertragungsanzeige verwendet wird, um anzuzeigen, dass das Endgerät eine Datenübertragung unter Verwendung des schnellen Übertragungsverfahrens durchführt, oder
ein Datenpaket zu empfangen, das von dem Endgerät gesendet wird und eine erste Schnellübertragungsanzeige umfasst, wobei die erste Schnellübertragungsanzeige verwendet wird, um anzuzeigen, dass das Endgerät eine Datenübertragung unter Verwendung des schnellen Übertragungsverfahrens durchführt,
wobei die erste Schnellübertragungsanzeige mindestens eine von einer Zugriffssignatur, einem Kanalisierungscode eines physischen Direktzugriffskanals (Physical Random Access Channel, PRACH) und einem Zugriffszeitschlitz umfasst oder wobei die erste Schnellübertragungsanzeige Reservebits in einer Medienzugriffssteuerungsnachrichten (Media Access Control Message, MAC-i)-Kopfzeile 0 in dem Datenpaket oder eine temporäre Kennung des erweiterten Datenkanal-Funknetzwerks (E-RNTI) in einer MAC-i-Kopfzeile 0 in dem Datenpaket darstellt, **dadurch gekennzeichnet, dass**
der Sender (1102) ferner konfiguriert ist, um:
vor dem Empfangen durch die Basisstation des von dem UE gesendeten Datenpakets eine Pagingnachricht von der RNC an die UE weiterzuleiten, wobei die Pagingnachricht eine dritte Schnellübertragungsanzeige umfasst und die dritte Schnellübertragungsanzeige zum Auslösen des UE verwendet wird, um die schnelle Übertragungsprozedur zum Durchführen der Datenübertragung zu verwenden, wobei die dritte Schnellübertragungsanzeige in einem Feld für den Grund des Pagings der Pagingnachricht enthalten ist oder in einer temporären Hochgeschwindigkeits-Downlink-Funknetzwerkkennung des gemeinsam genutzten Kanals (High-Speed Downlinked Shared Channel Radio Network Temporary Identifier, H-RNTI), die der Pagingnachricht entspricht, enthalten ist.

2. Funknetzwerksteuerung (RNC), umfassend:
einen Empfänger (1201), der konfiguriert ist, um, unter Verwendung einer Basisstation, ein von einem Endgerät gesendetes Datenpaket zu empfangen, wobei das Datenpaket eine Schnellübertragungsanzeige umfasst, und die Schnellübertragungsanzeige verwendet wird, um anzuzeigen, dass eine schnelle Übertragungsprozedur verwendet wird, um die Datenübertragung des Datenpakets durchzuführen;
wobei der Empfänger (1201) insbesondere konfiguriert ist, um:
einen Datenrahmen eines Direktzugriffskanals (Random Access Channel, RACH), der von der Basisstation gesendet wird, zu empfangen, wobei die Schnellübertragungsanzeige eine Übertragungsartkennung ist, die in dem RACH-Datenrahmen enthalten ist; oder
einen Datenrahmen eines erweiterten Datenkanals (Enhanced Data Channel, E-DCH), der von der Basisstation gesendet wird, zu empfangen, wobei die Schnellübertragungsanzeige eine Ressourcenkennung und/oder eine Übertragungsartkennung, die in dem E-DCH-Datenrahmen enthalten ist/sind, oder eine temporäre Kennung des erweiterten Datenkanal-Funknetzwerks (E-RNTI), die in dem E-DCH-Datenrahmen enthalten ist, oder eine E-RNTI und ein Datenpakettyp-Kennzeichen, die in dem E-DCH-Datenrahmen enthalten sind, darstellt; und
einen Prozessor (1202), der konfiguriert ist, um einen Datenübertragungsträger einzurichten oder zu aktivieren; und
einen Sender (1203), **dadurch gekennzeichnet, dass**
der Sender (1203) insbesondere konfiguriert ist, um:
vor dem Empfangen des von dem UE gesendeten Datenpakets eine Pagingnachricht an das UE zu senden, wobei die Pagingnachricht eine dritte Schnellübertragungsanzeige umfasst und die dritte Schnellübertragungsanzeige zum Auslösen des UE verwendet wird, um die schnelle Übertragungsprozedur zum Durchführen der Datenübertragung zu verwenden, wobei die Schnellübertragungsanzeige in einem Feld für den Grund des Pagings der Pagingnachricht enthalten ist oder in einer temporären Hochgeschwindigkeits-Downlink-Funknetzwerkkennung des gemeinsam genutzten Kanals (H-RNTI), die der Pagingnachricht entspricht, enthalten ist.

3. RNC nach Anspruch 2, wobei der Sender (1203) ferner konfiguriert ist, um:
vor dem Empfangen des von dem Endgerät gesendeten Datenpakets eine Systeminformationsblock (SIB)-Nachricht an das Endgerät zu senden, wobei die SIB-Nachricht eine Trägerkonfigurationsinformation der Datenübertragung transportiert, sodass das Endgerät das Datenpaket gemäß der Trägerkonfigurationsinformation an die Basisstation sendet.

4. RNC nach einem der Ansprüche 2 bis 3, wobei der Sender (1203) ferner konfiguriert ist, um:
nach dem Empfangen des von dem Endgerät gesendeten Datenpakets eine Synchronisationsnachricht an das Endgerät zu senden, sodass das Endgerät den Datenübertragungsträger gemäß der Synchronisationsnachricht freigibt.

## Revendications

1. Station de base comprenant :
un récepteur (1101), configuré pour recevoir un paquet de données envoyé depuis un dispositif de terminal ; et
un émetteur (1102), configuré pour envoyer le paquet de données à un dispositif de commande de réseau radio (RNC), dans laquelle le paquet de données comprend une deuxième indication de transmission rapide et la deuxième indication de transmission rapide est utilisée pour indiquer qu'une procédure de transmission rapide est utilisée pour effectuer une transmission de données du paquet de données,
dans laquelle l'émetteur (1102) est en outre configuré :
pour envoyer une trame de données de canal d'accès aléatoire (RACH) au dispositif RNC, dans laquelle la deuxième indication de transmission rapide est un identifiant de manière de transmission inclus dans la TRAME DE DONNÉES DE CANAL RACH; ou
pour envoyer une TRAME DE DONNÉES de canal de données amélioré (E-DCH) au dispositif RNC, dans laquelle la deuxième indication de transmission rapide est un identifiant de ressources et/ou un identifiant de manière de transmission qui sont inclus dans la TRAME DE DONNÉES DE CANAL E-DCH ou un identifiant E-RNTI dans la TRAME DE DONNÉES DE CANAL E-DCH ou un identifiant E-RNTI et un indicateur de type de paquet de données qui se trouvent dans la TRAME DE DONNÉES DE CANAL E-DCH ;
dans laquelle le récepteur (1101) est en outre configuré :
avant la réception du paquet de données envoyé depuis le dispositif de terminal, pour recevoir des informations d'accès envoyées depuis le dispositif de terminal, dans laquelle les informations d'accès comportent une première indication de transmission rapide et la première indication de transmission rapide est utilisée pour indiquer que le dispositif de terminal effectue une transmission de données en utilisant la procédure de transmission rapide ou
pour recevoir un paquet de données qui est envoyé depuis le dispositif de terminal et qui comprend une première indication de transmission rapide, dans laquelle la première indication de transmission rapide est utilisée pour indiquer que le dispositif de terminal effectue une transmission de données en utilisant la procédure de transmission rapide,
dans laquelle la première indication de transmission rapide comprend une signature d'accès et/ou un code de découpage en canaux de canal d'accès aléatoire physique (PRACH) et/ou un intervalle de temps d'accès ou dans laquelle la première indication de transmission rapide est des bits de réserve dans un en-tête 0 de message de contrôle d'accès au support (en-tête MAC-i) dans le paquet de données ou est un identifiant temporaire de réseau radio de canal de données amélioré (E-RNTI) dans un en-tête 0 MAC-i dans le paquet de données,
**caractérisée en ce que**
l'émetteur (1102) est en outre configuré :
avant la réception, par la station de base, du paquet de données envoyé depuis un équipement utilisateur, à expédier un message de radiomessagerie depuis le dispositif RNC à l'équipement utilisateur, dans laquelle le message de radiomessagerie comprend une troisième indication de transmission rapide et la troisième indication de transmission rapide est utilisée pour déclencher l'équipement utilisateur pour utiliser la procédure de transmission rapide pour effectuer la transmission de données, dans laquelle la troisième indication de transmission rapide est incluse dans un champ de cause de radiomessagerie du message de radiomessagerie ou incluse dans un identifiant temporaire de réseau radio de canal partagé de liaison descendante à grande vitesse (H-RNTI) correspondant au message de radiomessagerie.

2. Dispositif de commande de réseau radio (RNC) comprenant :
un récepteur (1201), configuré pour recevoir, en utilisant une station de base, un paquet de données envoyé depuis un dispositif de terminal, dans lequel le paquet de données comprend une indication de transmission rapide et l'indication de transmission rapide est utilisée pour indiquer qu'une procédure de transmission rapide est utilisée pour effectuer une transmission de données du paquet de données,
dans lequel le récepteur (1201) est spécialement configuré :
pour recevoir une trame de données de canal d'accès aléatoire (RACH) envoyée depuis la station de base, dans lequel l'indication de transmission rapide est un identifiant de manière de transmission inclus dans la TRAME DE DONNÉES DE CANAL RACH ; ou
pour recevoir une TRAME DE DONNÉES de canal de données amélioré (E-DCH) envoyée depuis la station de base, dans lequel l'indication de transmission rapide est un identifiant de ressources et/ou un identifiant de manière de transmission qui est/sont inclus dans la TRAME DE DONNÉES DE CANAL E-DCH ou un identifiant temporaire de réseau radio de canal e-DCH (E-RNTI) inclus dans la TRAME DE DONNÉES DE CANAL E-DCH ou un identifiant E-RNTI et un identifiant de type de paquet de données qui sont inclus dans la TRAME DE DONNÉES DE CANAL E-DCH ; et
un processeur (1202), configuré pour établir ou activer une porteuse de transmission de données ; et
un émetteur (1203), **caractérisé en ce que** l'émetteur (1203) est spécialement configuré :
avant que le paquet de données envoyé depuis l'équipement utilisateur ne soit reçu, pour envoyer un message de radiomessagerie à l'équipement utilisateur, dans lequel le message de radiomessagerie comprend une troisième indication de transmission rapide et la troisième indication de transmission rapide est utilisée pour déclencher l'équipement utilisateur pour utiliser la procédure de transmission rapide pour effectuer une transmission de données, dans lequel l'indication de transmission rapide est incluse dans un champ de cause de radiomessagerie du message de radiomessagerie ou incluse dans un identifiant temporaire de réseau radio de canal partagé de liaison descendante à grande vitesse (H-RNTI) correspondant au message de radiomessagerie.

3. Dispositif RNC selon la revendication 2, dans lequel l'émetteur (1203) est en outre configuré :
avant que le paquet de données envoyé depuis le dispositif de terminal ne soit reçu, pour envoyer un message de bloc d'informations système (SIB) au dispositif de terminal, dans lequel le message de bloc SIB comporte des informations de configuration de porteuse de la transmission de données de telle sorte que le dispositif de terminal envoie le paquet de données à la station de base selon les informations de configuration de porteuse.

4. Dispositif RNC selon l'une quelconque des revendications 2 à 3, dans lequel l'émetteur (1203) est en outre configuré :
après que le paquet de données envoyé depuis le dispositif de terminal est reçu, pour envoyer un message de synchronisation au dispositif de terminal de telle sorte que le dispositif de terminal libère la porteuse de transmission de données selon le message de synchronisation.
